# EUROPÄISCHE PATENTSCHRIFT

(11) **EP 2 244 882 B1**
(45) Veröffentlichungstag und Bekanntmachung des Hinweises auf die Patenterteilung: **06.06.2018**
(21) Anmeldenummer: 08872882.9
(22) Anmeldetag: 31.10.2008
(51) Int. Cl.: B32B 7/10

(54) **POLYMERSCHICHTVERBUND FÜR EIN SICHERHEITS- UND/ODER WERTDOKUMENT UND VERFAHREN ZU DESSEN HERSTELLUNG**
POLYMER LAYER COMPOSITE FOR SECURITY AND/OR VALUABLE DOCUMENT, METHOD FOR THE PRODUCTION THEREOF
COMPOSITE POLYMÈRE STRATIFIÉ POUR UN DOCUMENT DE SÉCURITÉ ET/OU DE VALEUR, PROCÉDÉ DE FABRICATION ASSOCIÉ

(30) Priorität: 29.02.2008 DE 102008012430
(43) Veröffentlichungstag der Anmeldung: 03.11.2010
(73) Patentinhaber: Bundesdruckerei GmbH, 10969 Berlin (DE)
(72) Erfinder: MUTH, Oliver, 12277 Berlin (DE); PAESCHKE, Manfred, 16348 Wandlitz OT Basdorf (DE); MATHEA, Arthur, 14199 Berlin (DE); SPRINGMANN, Edward, 10249 Berlin (DE); LEOPOLD, André, 10119 Berlin (DE); FISCHER, Jörg, 13053 Berlin (DE); PFLUGHOEFFT, Malte, 13347 Berlin (DE)
(74) Vertreter: Patentanwälte Bressel und Partner mbB
(86) Internationale Anmeldenummer: PCT/EP2008/009334
(87) Internationale Veröffentlichungsnummer: WO 2009/106105

(56) Entgegenhaltungen:
- EP-A- 0 384 274
- EP-A- 1 640 156
- US-A1- 2003 232 210
- US-A1- 2004 135 867

## Beschreibung

### Gebiet der Erfindung

Die vorliegende Erfindung betrifft einen Polymerschichtverbund für ein Sicherheits- und/oder Wertdokument sowie ein Verfahren zu dessen Herstellung. Ferner betrifft die Erfindung ein Sicherheits- und/oder Wertdokument, das aus dem erfindungsgemäßen Polymerschichtverbund herstellbar ist, beispielsweise durch Einschweißen des Verbundes in transparente Schutzfolien. Außerdem betrifft die Erfindung die Verwendung des Sicherheits- oder Wertdokuments als Kreditkarte, Bankkarte, Barzahlungskarte, Kundenkarte, Visakarte, ID-Karte, Personalausweis, Reisepass oder Führerschein.

### Stand der Technik und Hintergrund der Erfindung

Kartenförmige Datenträger dienen beispielsweise zur Identifikation von Personen und/oder Gegenständen und/oder zum bargeldlosen Zahlungsverkehr. Sie weisen u.a. visuell erkennbare Merkmale auf, die sie eindeutig einer Person und/oder einem Gegenstand und/oder einem Geld- oder Wertpapierkonto zuordnen und nur dem Eigentümer erlauben, sich auszuweisen bzw. über den Gegenstand bzw. das Konto zu verfügen und Geldtransfers zu veranlassen. Aus diesem Grunde müssen diese Datenträger Sicherheitsmerkmale aufweisen, die es unbefugten Personen praktisch unmöglich machen, die Karten zu fälschen oder zu verfälschen, so dass Missbrauch weitestgehend unterbunden werden kann. Außerdem soll eine Fälschung somit auch leicht erkennbar sein.

Zur Sicherung gegen Fälschung oder Verfälschung ist für die bekannten kartenförmigen Datenträger bisher eine Vielzahl von unterschiedlichen Sicherheitsmerkmalen vorgeschlagen und auch verwirklicht worden, beispielsweise Guillochen, Wasserzeichen, Prägemarken, Durchlichtpasser, durch Lasergravur hergestellte Passbilder, Hologramme, Kippbilder, Fluoreszenzmarken und diverse andere Merkmale. Diese Merkmale sollen dazu dienen, eine Fälschung zu erschweren oder sogar praktisch unmöglich zu machen. Hierzu soll es äußerst schwierig sein, diese Merkmale zu reproduzieren.

Wesentliche Sicherheitsmerkmale in den kartenförmigen Datenträgern sind personalisierte und/oder individualisierte Merkmale, die in dem Datenträger gespeichert sind. Personalisierte Merkmale sind beispielsweise Passbilder und Daten der Person, der die Karte zugeordnet ist, beispielsweise das Geburtsdatum, die Adresse oder Identifikationsnummer in einem Unternehmen sowie biometrische Daten, wie ein digitalisierter Datensatz von Fingerabdrücken, oder die Größe, Augenfarbe der Person oder deren Zugehörigkeit zu einer Krankenkasse. Individualisierte Merkmale sind Daten, die einer bestimmten Einrichtung, wie beispielsweise einem Kraftfahrzeug, einem Bankkonto oder einem Wertpapier, zugeordnet sind.

Derartige personalisierte und/oder individualisierte Merkmale werden auf den kartenförmigen Datenträgern für die sie benutzende Person individuell aufgebracht. Daher muss das Verfahren zu deren Erzeugung flexibel gestaltet sein. Beispielsweise sind Verfahren und Vorrichtungen zur Aufbringung derartiger Daten auf kartenförmige Datenträger in US 6,022,429 A, US 6,264,296 B1, US 6,685,312 B2, US 6,932,527 B2, US 6,979,141 B1 und US 7,037,013 B2, deren Offenbarungsgehalt hiermit vollumfänglich in den Offenbarungsgehalt dieser Beschreibung aufgenommen wird, beschrieben, wobei die personalisierten und/oder individualisierten Merkmale u.a. mittels Tintenstrahldrucktechnik auf die Karten aufgebracht werden können. In einigen der vorgenannten Dokumente wird zudem angegeben, dass diese Daten nach dem Aufbringen mit einer Schutzfolie überzogen werden.

In US 2004/0135867 A1 ist ein mit einem Bild bedruckter Gegenstand offenbart. Das Bild hat eine relativ hohe Haltbarkeit und/oder Auflösung. Zur Herstellung des Gegenstandes wird die Oberfläche des Bedruckstoffes mit Plasma behandelt.

Aus US 2003/0232210 A1 ist ein Schaumgegenstand bekannt, dessen Oberfläche Tinte aufnehmend ist. Das bedruckbare Substrat umfasst mindestens eine Polypropylen-Schaumschicht mit der Tinte aufnehmenden Oberfläche. Die Oberfläche kann oxidierend behandelt sein, etwa mittels Corona-Behandlung oder Flammenbehandlung. Das bedruckbare Substrat ist insbesondere für die Herstellung von bedruckten Sicherheitsdokumenten geeignet.

Hochwertige kartenförmige Datenträger bestehen heutzutage insbesondere aus Polycarbonat. Eine Personalisierung und/oder Individualisierung von Karten auf Polycarbonatbasis findet typischerweise durch Lasergravur statt. Dabei wird ein Laserstrahl in das Material fokussiert und über das Material geführt. Der Laserstrahl erzeugt dabei im Inneren durch Pyrolyse Schwärzungen, die je nach Laserintensität und Dauer an den jeweiligen Stellen unterschiedlich intensiv sind. Somit kann ein Bild oder eine andere Graphik oder auch ein Schriftzug oder eine Zahlen- und/oder Buchstabenkombination erzeugt werden.

Allerdings ist es mit diesem Verfahren nicht möglich, farbige Bilder oder Graphiken sowie Schrift- oder Zahlensequenzen zu erzeugen, sondern lediglich schwarz/weiße Darstellungen. Allenfalls ist es in gewissem Umfange auch möglich, Grau-Töne /-stufen zu erzeugen. Daher hat es nicht an weiteren Versuchen gefehlt, farbige Darstellungen mittels Drucktechniken in den Karten herzustellen. Allerdings hat sich dies als problematisch herausgestellt, da die verwendbaren Drucktinten für die Gestaltung der Karten nicht ausreichend geeignet sind. Denn ein auf einer Polymerfolie hergestellter Farbdruck führt bei nachfolgendem Zusammenfügen dieser Folie mit weiteren Folien bei innen liegendem Druck mitunter dazu, dass der so hergestellte laminierte oder anderweitig zusammengefügte Folienstapel durch Manipulationen in der Lage möglicherweise wieder delaminiert werden kann, in der die Druckschicht angeordnet ist. Je nach chemischer Beschaffenheit der Tinte zeigen sich Inkompatibilitäten, die sich in Form mangelnder Adhäsion bemerkbar machen. Insbesondere wasserbasierte Tinten können auf einer Vielzahl von Polymeren (z.B. Polyolefine, Polyester, Polycarbonate) einfach abgekratzt werden und somit bereits vor dem Fügen Probleme bereiten. Eine derartige Schwachstelle in dem Sicherheits- und/oder Wertdokument ist jedoch nicht akzeptabel, da dadurch eine Verfälschung des Dokuments erleichtert wird.

Zur Herstellung eines organischen oder teilweise organischen Schaltungselements ist ein Verfahren in US 2005/0151820 A1, dessen Offenbarungsgehalt hiermit vollumfänglich in den Offenbarungsgehalt dieser Beschreibung aufgenommen wird, beschrieben, mit dem es möglich ist, Strukturen im µm- oder Sub-µm-Bereich zu erzeugen, um eine erste und eine zweite Region eines gedruckten Materials zu bilden. Dies beruht darauf, dass sich selbst ausrichtende ("self-aligned") Strukturen erzeugt werden, indem ein erstes Material in einem gedruckten Muster hergestellt wird und eine Lösung eines zweiten Materials von dem Muster des ersten Materials abgestoßen wird. Dadurch werden schmale Spalte zwischen den Mustern der beiden Materialien gebildet. Beispielsweise werden zunächst eine Lösung eines ersten Materials und dann ein zweites Material, das von der ersten Lösung abgestoßen wird, auf eine Unterlage aufgebracht. In dem Dokument werden verschiedene Alternativen zur Auswahl der beiden Materialien angegeben, um den gewünschten Effekt hervorzurufen. Die Anwendungsbeispiele in diesem Dokument beziehen sich auf elektrisch leitfähige oder halbleitende organische Verbindungen.

Weiterhin ist unter (http://gmwgroup.harvard.edu/research_surfacescience.html) am 8. Februar 2008 eine technische Mitteilung abgerufen worden, wonach Gold- oder andere Edelmetalloberflächen mittels eines Microcontact Printing-Verfahrens modifiziert werden können, um beispielsweise hydrophobe und hydrophile Monolagen auf einer Goldoberfläche zu erzeugen. Hierzu wird ein Stempel unter Verwendung eines Soft Lithographie-Verfahrens hergestellt, mit einem Alkanthiol benetzt und mit der Goldoberfläche in Kontakt gebracht. Es können sich selbst organisierende ("self-assembled") Monolagen mit hydrophoben und andere mit hydrophilen Molekülenden im µm-Maßstab gebildet werden.

### Technisches Problem der Erfindung

Von daher liegt der vorliegenden Erfindung zunächst das Problem zugrunde, dass ein Schichtverbund mit personalisierten und/oder individualisierten Merkmalen, die drucktechnisch hergestellt worden sind, durch unbefugte Manipulationen möglicherweise delaminiert oder gespalten werden kann, so dass es wünschenswert ist, ein Verfahren zu finden, mit dem dies sicher verhindert wird.

Außerdem hat es in der Vergangenheit nicht an Versuchen gefehlt, Verfahren zu finden, die geeignet sind, neuartige Sicherheitsmerkmale zu schaffen, die in einem Polymerschichtverbund, vor allem auf Polycarbonatbasis, enthalten sind. Daher liegt der vorliegenden Erfindung die weitere Aufgabe zugrunde, neuartige Sicherheitsmerkmale für Sicherheits- und/oder Wertdokumente zu finden, deren Fälschung oder Verfälschung praktisch ausgeschlossen ist.

### Kurze Beschreibung der Erfindung

Soweit in der Beschreibung und in den Ansprüchen der Begriff "Muster" verwendet wird, ist darunter sowohl eine auf irgendeine Art und Weise strukturierte als auch eine ganzflächige Druckwiedergabe zu verstehen. Als strukturierte Druckwiedergabe kommen beispielsweise ein Bild, wie ein Passbild, oder eine graphische Druckwiedergabe, beispielsweise Guillochen oder eine Hintergrundrasterung, oder alphanumerische Zeichen oder ein eindimensionaler oder zweidimensionaler Barcode oder ein Emblem, Wappen, Hoheitszeichen oder irgendeine andere Druckwiedergabe in Betracht.

Soweit in der Beschreibung und in den Ansprüchen der Begriff "Oberflächenenergie" verwendet wird, ist darunter die Neigung der betreffenden Oberfläche (der Polymerschichtoberfläche) zu verstehen, in Wechselwirkung mit einer Flüssigkeit zu treten, beispielsweise einer Drucktinte. Die Oberflächenenergie ist dann niedrig, wenn nur wenige Bindungen der Oberflächen zur Wechselwirkung mit der Flüssigkeit zur Verfügung stehen, und hoch, wenn viele Bindungen zur Verfügung stehen. Bei niedriger Oberflächenenergie ist die Oberfläche von der Flüssigkeit nicht oder nicht gut benetzbar, und bei hoher Oberflächenenergie wird die Oberfläche von der Flüssigkeit gut benetzt.

Zur Erzeugung neuartiger fälschungs- und verfälschungssicherer Sicherheitsmerkmale wird ein Polymerschichtverbund für ein Sicherheits- und/oder Wertdokument, beispielsweise für eine Kreditkarte, Bankkarte, Barzahlungskarte, Kundenkarte, Visakarte, ID-Karte, einen Personalausweis, Reisepass oder einen Führerschein, vorgeschlagen, der mindestens zwei stoffschlüssig miteinander verbundene Schichten aufweist, wobei auf mindestens einer Oberfläche mindestens einer der Schichten durch jeweiliges Aufbringen einer (primären) sichtbaren Druckschicht in einem Druckbereich Muster gebildet sind. In erfindungsgemäßer Art und Weise sind die Muster dieser primären sichtbaren Druckschichten dadurch verändert, dass die Oberflächenenergie der Polymerschichten in Teilbereichen der Druckbereiche vor dem Aufbringen der sichtbaren Druckschichten modifiziert ist, wobei auch diese Teilbereiche ebenfalls ein Muster (sekundäres Muster) bilden, und dass die Modifizierung der Oberflächenenergie in einer Erhöhung oder Erniedrigung der Hydrophilie der Oberfläche in den Druckbereichen besteht.

Ein derartiger Polymerschichtverbund wird erfindungsgemäß unter Anwendung folgender Verfahrensschritte hergestellt: (a) Bereitstellen der Schichten für den Polymerschichtverbund, (b) Modifizieren der Oberflächenenergie der Schichten in Teilbereichen der Druckbereiche unter Bildung jeweiliger sekundärer Muster, wobei die Modifizierung der Oberflächenenergie in einer Erhöhung oder Erniedrigung der Hydrophilie der Oberfläche in den Druckbereichen besteht, (c) Bilden von primären Mustern durch jeweiliges Aufbringen einer sichtbaren Druckschicht auf
mindestens eine Oberfläche mindestens einer der Schichten in dem Druckbereich, (c') optional weiteres Modifizieren der Oberflächenenergie, so dass eine weitere Schicht des Schichtverbundes auf den weiter modifizierten Oberflächenbereichen fest haftet, und (d) stoffschlüssiges Verbinden der Schichten miteinander.

Ausgangspunkt der vorliegenden Erfindung ist die Erkenntnis, dass neuartige Sicherheitselemente in Sicherheits- und/oder Wertdokumenten erzeugt werden können, wenn auf drucktechnischem Wege hergestellte insbesondere personalisierte und/oder individualisierte Merkmale durch eine Modifizierung der Oberflächenenergie der Schichten in Form eines sekundären Musters auf der bedruckbaren Fläche verändert werden. Werden nämlich beispielsweise personalisierte und/oder individualisierte Merkmale in einem Raster gedruckt, etwa in einem Raster wie beim Drucken mit einem Tintenstrahl-Druckverfahren, so werden die einzelnen Rasterflächen dieses primären Drucks durch die Struktur der hinsichtlich ihrer Oberflächenenergie modifizierten Oberflächenteilbereiche verändert. Anders ausgedrückt: Das Druckbild des primären sichtbaren Druckes wird durch das Muster der hinsichtlich ihrer Oberflächenenergie modifizierten Oberflächenteilbereiche überlagert: Dort wo sich die modifizierten Oberflächenbereiche befinden, nimmt das Material des Schichtverbundes keine Drucktinte auf. Somit werden beispielsweise von kreisrunden Rasterflächen, die mit einem Tintenstrahl-Druckverfahren hergestellt werden, Bereiche ausgeblendet, beispielsweise seitlich Bereiche abgeschnitten, oder diese Flächen entfallen ganz, sofern sie beim Druckvorgang auf die modifizierten Teilbereiche treffen. Denn auf diese Teilbereiche auftreffende Drucktinte wird von diesen Teilbereichen durch die veränderte Oberflächenenergie abgestoßen und fließt in benachbarte Teilbereiche der Oberfläche ab, in denen die Oberflächenenergie nicht verändert ist und auf denen die Drucktinte haftet.

Durch diese Veränderung der Rasterflächen eines Druckes in dem Sicherheits- und/oder Wertdokument wird ein Sicherheitsmerkmal gebildet. Selbstverständlich ergeben sich derartige Überlagerungen des primären Druckes auch dann, wenn der primäre Druck nicht aus Rasterflächen besteht sondern ganzflächig ist. Durch die spezifische Veränderung des Druckbildes, die zumindest bei ausreichender optischer Vergrößerung sichtbar gemacht werden kann, ist ohne weiteres verifizierbar/erkennbar, ob das Sicherheits- und/oder Wertdokument gefälscht wurde.

Die Oberflächenmodifizierung besteht in einer Erhöhung oder Erniedrigung der Hydrophilie oder Hydrophobie der Oberfläche in den Druckbereichen. Darunter ist zu verstehen, dass die Oberflächenbereiche, die derart modifiziert sind, hydrophilere bzw. hydrophobere Eigenschaften aufweisen als die nicht modifizierten Oberflächen. Wird beispielsweise ein Oberflächenbereich, der im Wesentlichen hydrophobe Eigenschaften hat, somit auch eine mit Wasser überwiegend nicht mischbare, Lösungsmittel enthaltende Drucktinte annimmt und daher von dieser bedruckbar ist, durch Erhöhung der Hydrophilie
modifiziert, so wird die Aufnahmefähigkeit für diese Drucktinte verringert bzw. vollständig aufgehoben. Auf einen derartigen Teilbereich auftreffende Drucktinte wird auf benachbarte Oberflächenbereiche abgeleitet. Entsprechendes gilt für den Fall, dass eine Oberfläche, die im Wesentlichen hydrophile Eigenschaften hat, somit eine mit Wasser überwiegend gut mischbare, Lösungsmittel enthaltende Drucktinte annimmt und daher von dieser bedruckbar ist, durch Erniedrigung der Hydrophilie modifiziert wird. In diesem Falle wird die Aufnahmefähigkeit für diese Drucktinte auf dieser Oberfläche verringert bzw. vollständig aufgehoben.

Somit können die modifizierten Teilbereiche der Oberflächen eine sekundäre latent sichtbare Information und die sichtbaren Druckschichten eine primäre sichtbare Information ergeben, und die sekundäre latent sichtbare und die primäre sichtbare Information werden erfindungsgemäß überlagert. Hierbei erfolgt die Modifikation der ersten Information derart, dass die Gesamtheit der ersten Information in erster Näherung unverändert erscheint, zum Beispiel dass ein Photo keinen erkennbaren Qualitätsverlust aufweist.

### Detaillierte Beschreibung der Erfindung

Die vorliegende Erfindung betrifft einen Verbund aus Polymerschichten, der gegebenenfalls auch Schichten aus anderen Materialien, beispielsweise aus Pappe, Papier, Textilien, Gewebe, Gewirke, oder so genannte Prepregs zusätzlich enthalten kann, zur Herstellung von Sicherheits- und/oder Wertdokumenten. Diese Schichten haben vorzugsweise eine Dicke von etwa 20 µm bis etwa 250 µm, besonders bevorzugt von etwa 50 µm bis etwa 150 µm. Ein nach dem Laminieren gebildeter Stapel, einschließlich etwaiger Deckfolien, beträgt beispielsweise für ID-1 Karten nach ISO 7810 760 µm ± 80 µm.

Grundsätzlich sind als Werkstoffe für die Polymerschichten alle im Bereich der Sicherheits- und/oder Wertdokumente üblichen Werkstoffe einsetzbar. Die Polymerschichten können, gleich oder verschieden, auf Basis eines Polymerwerkstoffes aus der Gruppe, umfassend PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid) und Copolymeren solcher Polymere, gebildet sein. Des Weiteren können koextrudierte Folien dieser Materialien eingesetzt werden. Bevorzugt ist der Einsatz von PC-Werkstoffen, wobei beispielsweise, aber keinesfalls notwendigerweise, auch sogenannte Nieder-T_{g}-Werkstoffe auf Polycarbonat-Basis einsetzbar sind, insbesondere für eine Polymerschicht, auf welcher eine Druckschicht aufgebracht ist, und/oder für eine Polymerschicht, welche mit einer Polymerschicht, die eine Druckschicht trägt, verbunden ist, und zwar auf der Seite mit der Druckschicht. Nieder-T_{g}-Werkstoffe sind Polymere, deren Glastemperatur unterhalb von 140°C liegt.

Die Polymerschichten können gefüllt oder ungefüllt eingesetzt werden. Die gefüllten Polymerschichten enthalten insbesondere Farbpigmente oder andere Füllstoffe. Die Polymerschichten können auch mit Farbstoffen gefärbt oder farblos sowie transparent, transluzent oder opak sein.

Bevorzugt ist es dabei, wenn das Grundpolymer zumindest einer der zu verbindenden Polymerschichten gleiche oder verschiedene miteinander reaktive Gruppen enthält, wobei bei einer Laminiertemperatur von weniger als 200°C reaktive Gruppen einer ersten Polymerschicht miteinander und/oder mit reaktiven Gruppen einer zweiten Polymerschicht reagieren. Dadurch kann die Laminiertemperatur herabgesetzt werden, ohne dass dadurch der innige Verbund der laminierten Schichten gefährdet wird. Dies liegt im Falle verschiedener Polymerschichten mit reaktiven Gruppen daran, dass die verschiedenen Polymerschichten auf Grund der Reaktion der jeweiligen reaktiven Gruppen nicht mehr ohne weiteres delaminiert werden können. Denn zwischen den Polymerschichten findet eine reaktive Kopplung statt, gleichsam ein reaktives Laminieren. Des Weiteren wird ermöglicht, dass wegen der niedrigeren Laminiertemperatur eine Veränderung einer farbigen Druckschicht, insbesondere eine Farbveränderung, verhindert wird. Vorteilhaft ist es dabei, wenn die Glastemperatur T_{g} der zumindest einen Polymerschicht vor der thermischen Laminierung weniger als 120°C (oder auch weniger als 110°C oder weniger als 100°C) beträgt, wobei die Glastemperatur dieser Polymerschicht nach der thermischen Laminierung durch Reaktion reaktiver Gruppen des Grundpolymers der Polymerschicht miteinander um zumindest 5°C, vorzugsweise zumindest 20°C, höher als die Glastemperatur vor der thermischen Laminierung ist. Hierbei erfolgt nicht nur eine reaktive Kopplung der miteinander zu laminierenden Schichten. Vielmehr werden das Molekulargewicht und somit die Glastemperatur durch Vernetzung des Polymers innerhalb der Schicht und zwischen den Schichten erhöht. Dies erschwert ein Delaminieren zusätzlich, da beispielsweise die Drucktinten insbesondere bei einem Manipulationsversuch durch die hohen notwendigen Delaminationstemperaturen irreversibel beschädigt werden und das Dokument dadurch zerstört wird. Vorzugsweise beträgt die Laminiertemperatur beim Einsatz solcher Polymerwerkstoffe weniger als 180°C, besser noch weniger als 150°C. Die Auswahl der geeigneten reaktiven Gruppen ist für einen Fachmann auf dem Gebiet der Polymerchemie ohne Probleme möglich. Beispielhafte reaktive Gruppen sind ausgewählt aus der Gruppe, umfassend -CN, -OCN, -NCO, -NC, -SH, -Sₓ, -Tos, -SCN, -NCS, -H, -Epoxy (-CHOCH₂), -NH₂, -NN⁺, -NN-R, -OH, -COOH, -CHO, -COOR, -Hal (-F, -Cl, -Br, -I), -Me-Hal (Me = zumindest zweiwertiges Metall, beispielsweise Mg), -Si(OR)₃, -SiHal₃, -CH=CH₂, und -COR", wobei R" eine beliebige reaktive oder nicht-reaktive Gruppe sein kann, beispielsweise H, Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterocyclen mit einem oder mehreren gleichen oder verschiedenen Heteroatomen N, O, oder S. Andere reaktive Gruppen sind selbstverständlich möglich. Hierzu gehören die Reaktionspartner der Diels-Alder Reaktion oder einer Metathese.

Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermittelnden Spacergruppen sind dem Fachmann bekannt und brauchen daher hier nicht weiter beschrieben zu werden. Lediglich beispielhaft seien Spacergruppen genannt, welche ausgewählt sind aus der Gruppe, umfassend -(CH₂)ₙ-, -(CH₂-CH₂-O)ₙ-, -(SiR₂-O)ₙ-, -(C₆H₄)ₙ-, -(C₆H₁₀)ₙ-, C₁-Cₙ₋Alkyl, -C₃-C₍ₙ₊₃₎-Aryl, -C₄-C₍ₙ₊₄₎-ArAlkyl, jeweils verzweigt oder linear, gesättigt oder ungesättigt, optional substituiert, oder korrespondierende Heterocyclen mit einem oder mehreren, gleichen oder verschiedenen Heteroatomen O, N, oder S, wobei n = 1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2006, verwiesen. Der Begriff des Grundpolymers bezeichnet im Rahmen der vorstehenden Ausführungen eine Polymerstruktur, welche keine unter den eingesetzten Laminierbedingungen reaktiven Gruppen trägt. Es kann sich dabei um Homopolymere oder Copolymere handeln. Es sind auch gegenüber den genannten Polymeren modifizierte Polymere umfasst.

Die vorliegende Erfindung dient zur Herstellung von Sicherheitsmerkmalen in Sicherheits- und/oder Wertdokumenten, die darin bestehen, dass dieses Sicherheitsmerkmal insbesondere personalisierte und/oder individualisierte Merkmale betrifft. Dies bedeutet, dass insbesondere die primäre sichtbare Information, d.h. das sichtbare Druckmuster, ein personalisiertes und/oder individualisiertes Merkmal wiedergibt. In diesem Falle kann dieses primäre sichtbare Muster in einem Druckbild bestehen, das das personalisierte und/oder individualisierte Merkmal darstellt, wobei dieses Druckbild dann durch die sekundäre latent sichtbare Information, d.h. ein sekundäres latent sichtbares Muster, verändert ist. D.h. das primäre Druckbild ist trotz dieser Veränderung mit bloßem Auge erkennbar, während beispielsweise bei entsprechender optischer Vergrößerung erkennbar ist, dass einzelne Rasterflächen des primären Druckbildes verändert sind. Bei entsprechender Wahl des sekundären latent sichtbaren Musters kann diese Veränderung des primären Druckbildes gegebenenfalls auch bereits mit bloßem Auge erkennbar sein. Grundsätzlich kann auch das sekundäre latent sichtbare Muster zur Darstellung des personalisierten und/oder individualisierten Merkmals genutzt werden, oder sowohl das sekundäre Muster als auch das primäre Muster stellen personalisierte und/oder individualisierte Merkmale dar. Derartige als Wasserzeichen bezeichnete Strukturen sind aus dem Stand der Technik bekannt, welche jedoch im Allgemeinen mittels einer Modifikation der ersten Information vor deren Einbringung in das Dokument erfolgt.

Das personalisierte Merkmal kann insbesondere ein Passbild sein. Vorzugsweise wird dieses Passbild durch die primäre sichtbare Druckschicht wiedergegeben. Grundsätzlich kann ein personalisiertes Merkmal, das vorzugsweise durch die primäre sichtbare Druckschicht wiedergegeben wird, auch Daten der Person, der das Sicherheits- und/oder Wertdokument zugeordnet ist, beispielsweise das Geburtsdatum, die Adresse oder Identifikationsnummer in einem Unternehmen sowie biometrische Daten, wie einen digitalisierten Datensatz von Fingerabdrücken, oder die Größe, Augenfarbe der Person oder deren Zugehörigkeit zu einer Krankenkasse, wiedergeben. Grundsätzlich kann ein individualisiertes Merkmal Daten, die zu einem bestimmten Gegenstand oder zu einer bestimmten Einrichtung, wie beispielsweise einem Bankkonto oder einem Wertpapier, gehören, wiedergeben.

Das sekundäre latent sichtbare Muster kann insbesondere Guillochen oder auch eine Oberflächenrasterung mit Rasterflächen darstellen. In diesem Falle durchschneiden die Guillochen oder Oberflächenrasterung das primäre sichtbare Druckbild. Dies kann sich in einer mit bloßem Auge erkennbaren sekundären Darstellung, eben beispielsweise in Guillochen oder einer Rasterung, zeigen. Falls das primäre sichtbare Druckbild selbst gerastert ist und somit Druckpixel vorliegen, werden diese durch das sekundäre latent sichtbare Muster verändert, indem beispielsweise Teile der Druckpixel abgeschnitten werden, durchgeschnitten werden oder gänzlich entfallen oder die Pixel auch die Form der Rasterung des sekundären latent sichtbaren Musters annehmen. Wird das sekundäre latent sichtbare Muster beispielsweise in Form von Guillochen abgebildet, so kann sich dies in dem primären sichtbaren Druckbild in Form dieser Guillochen zeigen, indem nämlich dort, wo sich diese Guillochen befinden, unbedruckte Bereiche erscheinen, die das primäre sichtbare Druckbild überlagern.

Wird das sekundäre latent sichtbare Muster andererseits beispielsweise in Form einer Oberflächenrasterung gebildet, so hängt die Auswirkung dieser Art der Oberflächenmodifizierung auf das primäre sichtbare Druckbild davon ab, ob die durch die Oberflächenrasterung gebildeten Rasterflächen größer oder kleiner sind als Flächen der Druckpixel der primären sichtbaren Druckschicht:
Sind nämlich die Rasterflächen der (sekundären) Oberflächenrasterung kleiner als die Flächen der Druckpixel der primären sichtbaren Druckschicht, so ist diese Veränderung des primären Druckbildes nur bei geeigneter optischer Vergrößerung erkennbar. Diese Veränderung besteht dann darin, dass die Form der Druckpixel die Form der sekundären Rasterflächen in der Rasterung annimmt: Die einzelnen Druckpixel werden in die Rasterflächen der sekundären Oberflächenrasterung hinein "gezwängt".

Sind die Rasterflächen der sekundären Oberflächenrasterung dagegen größer als die Flächen der Druckpixel des primären Druckbildes, so können die Druckpixel innerhalb der Rasterflächen noch wieder erkannt werden; lediglich an den Rändern der Rasterflächen liegende Druckpixel können angeschnitten sein, durchgeschnitten sein oder vollständig entfallen.

Je nach Breite der die Rasterung bildenden modifizierten Teilbereiche der Oberflächen können die Grau- oder Farbtöne des primären Druckbildes zudem verändert werden: Denn in ausreichend breiten Bereichen der sekundären Rasterung befinden sich keine Druckpixel, und in diesen Bereichen auftreffende Drucktinte zur Herstellung des primären Druckbildes wird in die übrigen Bereiche umgeleitet. Somit vertiefen sich die Grau- bzw. Farbtöne in letzteren Bereichen, während dort, wo bereits ein tiefer Schwarz- oder voller Farbton aufgrund der Vorlage gebildet werden sollte, eine weitere Grau- oder Farbtonvertiefung nicht mehr möglich ist.

Somit kann die Veränderung der primären sichtbaren Information durch die sekundäre latent sichtbare Information zu einer gegebenenfalls nur schwierig erkennbaren oder nur schwierig reproduzierbaren Darstellung der primären sichtbaren Information führen. Daher stellt die kombinierte primäre und sekundäre Information ein neuartiges Sicherheitsmerkmal dar.

Für den vorstehenden Fall, dass die primäre Druckschicht aus Druckpixeln gebildet ist, kann eine weitere besondere Ausführungsform der Erfindung realisiert werden: Falls die Rasterflächen der modifizierten Teilbereiche unterschiedliche Größe und/oder unterschiedliche Form haben, wird ein weiteres Sicherheitsmerkmal ermöglicht: Insbesondere dann, wenn die Rasterflächen kleiner sind als die Flächen der Druckpixel der primären Druckschicht, nehmen diese Druckpixel - wie vorstehend beschrieben - die Form der Rasterflächen an. Werden Druckpixel mit unterschiedlicher Form (Kreis, Dreieck, Viereck, ...) und/oder unterschiedlicher Größe bestimmten Farben zugeordnet, in denen die jeweiligen Druckpixel auch tatsächlich gedruckt sind, so kann nachträglich in einem Dokument erkannt werden, ob dieses Dokument eine derartige Kodierung der Farben über die Form und/oder Größe der Farbpixel einhält. Ist dies nicht der Fall, so muss von einer Fälschung ausgegangen werden. Beispielsweise können den Rasterflächen mit einer Dreiecksform die Farbe Cyan, den Rasterflächen mit einer quadratischen Form die Farbe Magenta und den Rasterflächen mit einer kreisrunden Form die Farbe Yellow zugeordnet werden. Wird dann in einem Dokument gefunden, dass die Rasterflächen mit Dreiecksform mit Druckpixeln mit der Farbe Yellow ausgefüllt sind, so muss von einer Fälschung des Dokuments ausgegangen werden.

In einer weiteren Variante der vorstehenden Ausführungsform nehmen die Rasterflächen mehrere Druckpixel auf, die gegebenenfalls in unterschiedlichen Farben gedruckt sind. Dies ist dann möglich, wenn die Rasterflächen größer sind als die Flächen der Druckpixel. In diesem Falle ist es möglich, jeder Form und/oder Größe einer Rasterfläche eine bestimmte Farbe zuzuordnen, wobei die in den jeweiligen Rasterflächen gedruckten Druckpixel entweder in einer einheitlichen Farbe gedruckt werden, wie dies bereits zuvor dargestellt ist, oder es können auch Druckpixel unterschiedlicher Farben in eine Rasterfläche gedruckt werden. Diese unterschiedlichen Farben der Druckpixel in einer Rasterfläche mit einer bestimmten Größe und/oder Form ergeben dann zusammen einen optischen Farbeindruck, der durch die Größe und/oder Form der Rasterfläche kodiert ist, beispielsweise einen Rot-Ton.

Die genannten Sicherheitsmerkmale können prinzipiell auf einer einzigen Oberfläche einer Schicht des Schichtverbundes gebildet sein, oder es können auch mehrere primäre Druckschichten auf unterschiedlichen Oberflächen in dem Schichtverbund gebildet werden, wobei diese mehreren Oberflächen durch jeweils mindestens eine Polymerschicht voneinander getrennt und somit zueinander beabstandet sein können und wobei die Schichten des Schichtverbundes so zusammengefügt werden, dass die Darstellungen aller primären Druckschichten, beispielsweise Farbauszüge eines Photos, auf den unterschiedlichen Oberflächen vorzugsweise exakt übereinander liegen. In diesem Falle werden vorzugsweise Polymerschichten verwendet, die farblos transparent oder transluzent sind, um die Druckschichten in den unterschiedlichen Schichten des Schichtverbundes von außen visuell gut erkennen zu können. Grundsätzlich können die Polymerschichten in diesem Falle auch farbig transparent oder transluzent sein. Allerdings erscheinen gedruckte Farben dann verändert.

Beispielsweise kann eine geeignete Rasterung ein und derselben (primären) Darstellung, beispielsweise eines Passbildes, vorgenommen werden, indem die Darstellung etwa in schachbrettartig angeordnete Felder aufgeteilt und die Felder auf die verschiedenen Oberflächen des Schichtverbundes derart verteilt werden, dass sich die Felder alternierend auf aufeinander folgenden Oberflächen befinden. Beispielsweise kann eine Aufteilung der Felder auf zwei Oberflächen derart erfolgen, dass das erste, dritte, fünfte ... Feld von in einer Reihe aufeinander folgenden Feldern in der Darstellung auf einer ersten Oberfläche und das zweite, vierte, sechste, ... Feld auf einer zweiten Oberfläche und die entsprechenden Felder weiterer Reihen beispielsweise versetzt zu den benachbarten Reihen auf die gleiche Art und Weise auf die beiden Oberflächen verteilt werden. Dadurch dass die verschiedenen Oberflächen, auf denen sich die Teilbilder befinden, zueinander beabstandet sind, ergibt sich ein räumlicher Eindruck der Darstellung, der umso stärker ist je mehr Druckschichten auf unterschiedlichen Oberflächen im Schichtverbund in diese Darstellung einbezogen sind.

Weiterhin können auch unterschiedliche Farbauszüge der Darstellung hergestellt werden und die Farbauszüge auf unterschiedliche Oberflächen im Schichtverbund gedruckt werden, so dass sich beim Zusammenfügen der einzelnen Polymerschichten zu dem Schichtverbund die gewünschte farbige Darstellung ergibt.

Weiterhin kann die primäre sichtbare Information in einer anderen Ausführungsform der Erfindung mit Druckpixeln mit Satelliten gebildet sein, oder es kann auch eine weitere sichtbare Druckschicht in einem weiteren Druckbereich aufgebracht sein, der von dem Druckbereich verschieden ist, in dem die Oberflächen in Teilbereichen modifiziert sind, etwa auf einer anderen Polymerschicht, und Druckpixel mit Satelliten aufweisen. In letzterem Falle können die beiden Druckbereiche überlappen, wenn die beiden Polymerschichten passergenau übereinander gestapelt sind.

Derartige Druckpixel mit Satelliten werden bei einem Druck zwar üblicherweise vermieden, um ein perfektes Druckbild zu erzeugen. Es ist darüber berichtet worden, dass bei der Tropfenbildung beim Tintenstrahldrucken oder einem anderen Verfahren, bei dem Tintentropfen auf das Druckmedium aufgetragen werden ("drop-on-demand"-Verfahren), nicht nur ein einheitlicher Tropfen gebildet wird, sondern dass, abhängig von den Tinteneigenschaften und den Bedingungen, unter denen die Tropfen gebildet werden (zum Beispiel der Flankenform des den Tropfenausstoß aus der Druckdüse bestimmenden elektrischen Signals zum Ansteuern der Düse), mehr oder minder lange "Tropfenschwänze" entstehen, deren Geschwindigkeit kleiner ist als die der vorauseilenden Tropfen und aus denen sich daher weitere nachfolgende Satellitentropfen bilden können (H.Wijshoff in: "Drop formation mechanisms in piezo-acoustic inkjet", abgerufen unter http://www.flow3d.com/pdfs/tp/micro_tp/FloSci-Bib01-07.pdf am 8.2.2008, deren Offenbarungsgehalt hiermit vollumfänglich in den Offenbarungsgehalt dieser Beschreibung aufgenommen wird). Diese Satellitentropfen treffen verzögert und wegen der Bewegung des Druckkopfes und des Druckmediums relativ zueinander mit einem Versatz gegenüber dem Zentrum des Haupttropfens auf das Druckmedium auf. Bei ausreichendem Versatz beider Tropfen bilden sich ein Hauptpixel und ein (meist kleinerer) Satellitenpixel auf dem Druckmedium. Diese Erzeugung von Satellitenpixeln zusätzlich zu den Hauptpixeln kann daher als weiteres Sicherheitsmerkmal eingesetzt werden, da deren Erzeugung üblicherweise vermieden wird.

Weiterhin ist in US 7,093,915 B2, deren Offenbarungsgehalt hiermit vollumfänglich in den Offenbarungsgehalt dieser Beschreibung aufgenommen wird, angegeben worden, dass ein Satellitentropfen unter reproduzierbaren Erzeugungsbedingungen für die Satellitentropfen gegenüber der Hauptaustrittsrichtung für den Haupttropfen abgelenkt wird und zwar so, dass der Satellitentropfen unter Berücksichtigung der relativen Bewegung des Druckkopfes zum Druckmedium genau im Hauptpixel auf dem Druckmedium "landet", um einen zusätzlichen Satellitenpixel auf dem Druckmedium zu vermeiden. Dies wird gemäß US 7,093,915 B2 beispielsweise durch eine Düsenplatte mit Düsenöffnungen auf der Frontseite des Druckkopfes verwirklicht, wobei die Düsenöffnungen gegenüber den Austrittsöffnungen der Kanäle, aus denen die Tinte austritt, leicht versetzt sind und so die Satelliten- nicht aber die Haupttropfen abgelenkt werden. Die Satellitentropfen treten somit unter einem Winkel gegenüber der Austrittsrichtung des Haupttropfens aus. Durch geeignete Justage der Düsenöffnungen in der Düsenplatte gegenüber den Austrittsöffnungen kann der Austrittswinkel der Satellitentropfen eingestellt werden. Wird entgegen der Zielsetzung in US 7,093,915 B2 die Austrittsrichtung der Satellitentropfen gegenüber den Haupttropfen jedoch so verändert, dass die Satellitentropfen nicht in den Hauptpixeln "landen", sondern daneben, so bilden sich gezielt Satellitenpixel und zwar nicht nur in der Relativbewegungsrichtung zwischen Druckkopf und Druckmedium, sondern auch in dazu verschiedenen Richtungen. Der Austrittswinkel und außerdem auch die Orientierung der Richtung (in der Druckebene), unter der die Satellitentropfen austreten, können durch Justage der relativen Position der Düsenöffnungen auf der Frontseite des Druckkopfes gegenüber der der Austrittsöffnungen eingestellt werden. Dies kann ebenfalls zur Erzeugung eines Sicherheitsmerkmals herangezogen werden.

Soll das primäre sichtbare Druckbild mit Satelliten gedruckt werden, so ist es vorteilhaft, wenn die sekundäre latent sichtbare Information eine Oberflächenrasterung mit Rasterflächen, die größer sind als die Flächen der Druckpixel, ergibt. In diesem Falle sind die Satelliten an den Druckpixeln sichtbar, weil die Druckpixel in den Rasterflächen im Wesentlichen vollständig enthalten sind, so dass deren Vorhandensein ein weiteres Sicherheitsmerkmal darstellt.

Dann, wenn die Druckpixel mit Satelliten in einem weiteren Druckbereich gebildet sind, kann sich dieser weitere Druckbereich vorzugsweise auf einer Oberfläche im Schichtverbund befinden, die von dem ersten Druckbereich, in dem die Oberflächen in Teilbereichen modifiziert sind, durch mindestens eine Schicht des Verbundes getrennt ist. Außerdem kann dieser weitere Druckbereich mit dem ersten Druckbereich zumindest teilweise überlappen, so dass sich überlappende Teilbilder in einer gemeinsamen Darstellung, beispielsweise in einem Passbild, ergeben. In den einzelnen Teilbildern sind in diesem Falle unterschiedliche Sicherheitsmerkmale verwirklicht: zum einen im ersten Druckbereich das erfindungsgemäße Sicherheitsmerkmal, das durch die Modifizierung der Teilbereiche der Oberflächen verwirklicht wird, und zum anderen im weiteren Druckbereich das durch zusätzliche Satelliten an den Hauptpixeln gebildete Sicherheitsmerkmal.

Die vorstehenden Ausführungsformen können sich anstatt auf farbige Darstellungen auch auf eine schwarz/weiß-Darstellung, gegebenenfalls mit Grau-Tönen, sowie auf unter Normalbedingungen nicht sichtbare Darstellungen, zum Beispiel Lumineszenzdarstellungen, spezielle mittels UV anregbare Photolumineszenzdarstellungen oder mittels IR detektierbare Darstellungen, beziehen. Diese Ausführungsformen stellen zusätzliche Sicherheitsmerkmale zu den erfindungsgemäßen Sicherheitsmerkmalen dar und können mit diesen kombiniert werden.

Die vorstehenden Ausführungsformen können zusätzlich auch beliebig kombiniert werden, d.h. Drucke auf verschiedenen Ebenen oder auch auf derselben Ebene und jeweils mit unterschiedlichen Sicherheitsmerkmalen, wobei die Drucke auf derselben Ebene oder auf verschiedenen Ebenen passergenau übereinander gedruckt sind oder auch nicht passergenau übereinander.

Die Erfindung kann grundsätzlich mit jedem Druckverfahren realisiert werden, beispielsweise mit einem Hochdruckverfahren, einem Tiefdruckverfahren, Flachdruckverfahren, Durchdruckverfahren oder einem Digital-Druckverfahren (Non-Impact-Printing). Unter letzterem sind Druckverfahren zu verstehen, bei denen die zur Bilderzeugung erforderlichen Daten digital erstellt und zum Drucken unmittelbar, wie beim Tintenstrahl-Druckverfahren, oder mittelbar, wie bei einem xerographischen Druckverfahren, zur Herstellung des Druckbildes verwendet werden, ohne dass eine explizite Druckform benötigt wird. Somit sind sowohl Druckverfahren einsetzbar, bei denen das Druckbild gerastert ist, als auch Druckverfahren, bei denen nicht gerasterte Flächen gebildet werden. Bevorzugt für die Einbringung der ersten Information sind Digital-Druckverfahren, da diese flexibler und insbesondere zur Herstellung personalisierter und/oder individualisierter Information geeignet sind. Ganz besonders geeignet ist der Tintenstrahldruck.

Das eingangs angegebene weitere Problem, dass herkömmliche kartenförmige Datenträger durch Manipulation relativ leicht delaminiert werden können, wenn durch drucktechnische Verfahren auf einer innen liegenden Schicht des Schichtverbundes ein Sicherheitsmerkmal aufgebracht ist, kann dadurch gelöst werden, dass die sichtbaren Druckschichten Bindemittel enthalten, die zumindest im Wesentlichen aus demselben Polymer bestehen wie das Material der Schichten des Schichtverbundes. In diesem Falle wird die Gefahr von Delaminationen praktisch ausgeschlossen, weil sich beim Laminieren ein monolithischer Verbund der einzelnen Schichten bildet. Besonders bevorzugt ist es, wenn die sichtbaren Druckschichten Bindemittel auf Polycarbonatbasis enthalten, wenn zumindest einige der Schichten des Verbundes ebenfalls aus Polycarbonat bestehen. In letzterem Falle werden die sichtbaren Druckschichten auf innen liegenden Schichten des Schichtverbundes gedruckt, wobei insbesondere alle an die Druckschichten angrenzenden Schichten des Schichtverbundes aus Polycarbonat gebildet sind.

Für den Druck auf Polycarbonat-Verbundschichten sind grundsätzlich alle fachüblichen Tinten einsetzbar, sofern sie chemisch mit Polycarbonat kompatibel sind und eine Mindestaffinität bzw. -Mindestadhäsion aufweisen. Dazu zählen beispielsweise Lösungsmittelbasierte Tinten, die sowohl über Verdunstung des Lösungsmittels trocknen, als auch solche Systeme, bei denen das Lösungsmittel chemisch reagiert, etwa durch Vernetzung, Crosslinking, Polymerisation etc.

Für den Druck auf Polycarbonat-Verbundschichten sind grundsätzlich alle fachüblichen Tinten einsetzbar. Bevorzugt ist die Verwendung einer Zubereitung, enthaltend: A) 0,1 bis 20 Gew.-% eines Bindemittels mit einem Polycarbonatderivat, B) 30 bis 99,9 Gew.-% eines vorzugsweise organischen Lösungsmittels oder Lösungsmittelgemischs, C) 0 bis 10 Gew.-% eines Farbmittels oder Farbmittelgemischs (Gew.-% bezogen auf dessen Trockenmasse), D) 0 bis 10 Gew.-% eines funktionalen Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Drucktinte. Solche Polycarbonatderivate sind hochkompatibel mit Polycarbonatwerkstoffen, insbesondere mit Polycarbonaten auf Basis Bisphenol A, wie beispielsweise Makrofol® Folien. Zudem ist das eingesetzte Polycarbonatderivat hochtemperaturstabil und zeigt keinerlei Verfärbungen bei laminationstypischen Temperaturen bis zu 200°C und mehr, wodurch auch der Einsatz der vorstehend beschriebenen Nieder-T_{g}-Werkstoffe nicht notwendig ist. Im Einzelnen kann das Polycarbonatderivat funktionelle Carbonatstruktureinheiten der Formel (I) enthalten, 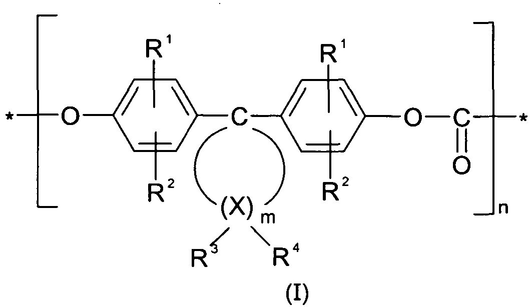 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl, sind; m eine ganze Zahl von 4 bis 7, bevorzugt 4 oder 5 ist; R³ und R⁴ für jedes X individuell wählbar, unabhängig voneinander Wasserstoff oder C₁-C₆-Alkyl ist; X Kohlenstoff und n eine ganze Zahl größer 20 bedeuten, mit der Maßgabe, dass an mindestens einem Atom X, R³ und R⁴ gleichzeitig Alkyl bedeuten. Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in α-Stellung zu dem Diphenyl-substituierten C-Atom (C1) können nicht dialkylsubstituiert sein. Die X-Atome in β-Stellung zu C1 können mit Alkyl disubstituiert sein. Bevorzugt ist m = 4 oder 5. Das Polycarbonatderivat kann beispielsweise auf Basis von Monomeren, wie 4,4'-(3,3,5-Trimethylcyclohexan-1,1-diyl)diphenol, 4,4'-(3,3-Dimethylcyclohexan-1,1-diyl)diphenol oder4,4'-(2,4,4-Trimethylcyclopentan-1,1-diyl)diphenol, gebildet sein. Ein solches Polycarbonatderivat kann beispielsweise gemäß der Literaturstelle DE-A 38 32 396 aus Diphenolen der Formel (Ia) hergestellt werden, deren Offenbarungsgehalt hiermit vollumfänglich in den Offenbarungsgehalt dieser Beschreibung aufgenommen wird. Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I). 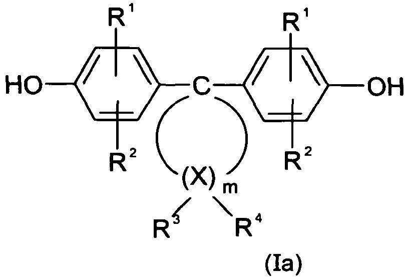 Außerdem können die Diphenole der Formel (Ia) auch im Gemisch mit anderen Diphenolen, beispielsweise mit denen der Formel (Ib)

HO-Z-OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann. Beispiele der Diphenole der Formel (Ib) sind Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, *α*,*α*'-Bis-(hydroxyphenyl)-diisopropylbenzole sowie deren kernalkylierte und kernhalogenierte Verbindungen. Diese und weitere geeignete Diphenole sind beispielsweise in US-A 3,028,365, US-A 2,999,835, US-A 3,148,172, US-A 3,275,601, US-A 2,991,273, US-A 3,271,367, US-A 3,062,781, US-A 2,970,131, US-A 2,999,846, DE-A 1 570 703, DE-A 2 063 050, DE-A 2 063 052, DE-A 2 211 956, FR-A 1 561 518 und in H. Schnell in: Chemistry and Physics of Polycarbonates, Interscience Publishers, New York 1964, beschrieben, deren Offenbarungsgehalt hiermit vollumfänglich in den Offenbarungsgehalt der vorliegenden Anmeldung aufgenommen werden. Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, α,α-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, *α*,*α*-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan. Besonders bevorzugte Diphenole der Formel (Ib) sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden. Das molare Verhältnis von Diphenolen der Formel (Ia) zu den gegebenenfalls mit zu verwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen. Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein. Die eingesetzten Polycarbonatderivate können in an sich bekannter Weise verzweigt sein. Wenn die Verzweigung gewünscht wird, kann diese in bekannter Weise durch Einkondensieren geringer Mengen, vorzugsweise von Mengen von 0,05 bis 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenyl-methan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-ortho-terephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert-Butylphenole oder andere Alkyl-substituierte Phenole. Zur Regelung des Molekulargewichts sind insbesondere kleine Mengen Phenole der Formel (Ic) geeignet 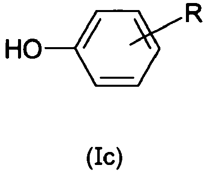 worin R einen verzweigten C₈- und/oder C₉-Alkylrest darstellt. Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt. Die Polycarbonatderivate können vorzugsweise nach dem Phasengrenzflächenverhalten (vgl. H.Schnell in. Chemistry and Physics of Polycarbonates, Polymer Reviews, Vol. IX, Seite 33ff., Interscience Publ. 1964) in an sich bekannter Weise hergestellt werden. Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt im Bereich von 0°C bis 40°C. Die gegebenenfalls mit verwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mit verwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden. Geeignete organische Lösungsmittel für die Kettenabbrecher sowie gegebenenfalls für die Verzweiger und die Chlorkohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden. Als organische Phase für die Phasengrenzflächenpolykondensation dienen beispielsweise Methylenchlorid, Chlorbenzol sowie Mischungen aus Methylenchlorid und Chlorbenzol. Als wässrige alkalische Phase dient beispielsweise NaOH-Lösung. Die Herstellung der Polycarbonatderivate nach dem Phasengrenzflächenverfahren kann in üblicher Weise durch Katalysatoren, wie tertiäre Amine, insbesondere tertiäre aliphatische Amine, wie Tributylamin oder Triethylamin, katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden. Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden. Die Polycarbonatderivate können linear oder verzweigt sein, sie sind Homopolycarbonate oder Copolycarbonate auf Basis der Diphenole der Formel (Ia). Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten. Das Polycarbonatderivat kann ein Copolymer sein, enthaltend, insbesondere hieraus bestehend, Monomereinheiten M1 auf Basis der Formel (Ib),vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, wobei das Molverhältnis M2/M1 vorzugsweise größer als 0,3, insbesondere größer als 0,4, beispielsweise größer als 0,5 ist. Bevorzugt ist es, wenn das Polycarbonatderivat ein mittleres Molekulargewicht (Gewichtsmittel) von mindestens 10.000, vorzugsweise von 20.000 bis 300.000, aufweist.

Die Komponente B kann grundsätzlich im Wesentlichen organisch oder wässrig sein. Im Wesentlichen wässrig bedeutet dabei, dass bis zu 20 Gew.-% der Komponente B organische Lösungsmittel sein können. Im Wesentlichen organisch bedeutet, dass bis zu 5 Gew.-% Wasser in der Komponente B vorliegen können. Vorzugsweise enthält die Komponente B einen bzw. besteht aus einem flüssigen aliphatischen, cycloaliphatischen und/oder aromatischen Kohlenwasserstoff, einem flüssigen organischen Ester und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4-Trimethylbenzol, Cumol und Solvent Naphtha, Toluol, Xylol, (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naphtha, Toluol, Xylol, Essigsäuremethylester, Essigsäureethylester, Methoxypropylacetat. Ethyl-3-ethoxypropionat. Ganz besonders bevorzugt sind Mesitylen (1,3,5-Trimethylbenzol), 1,2,4-Trimethylbenzol, Cumol (2-Phenylpropan), Solvent Naphtha und Ethyl-3-ethoxypropionat. Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt.

Die Zubereitung kann im Detail enthalten: A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans, B) 40 bis 99,9 Gew.-%, insbesondere 45 bis 99,5 Gew.-%, eines organischen Lösungsmittels oder Lösungsmittelgemischs, C) 0,1 bis 6 Gew.-%, insbesondere 0,5 bis 4 Gew.-%, eines Farbmittels oder Farbmittelgemischs, D) 0,001 bis 6 Gew.-%, insbesondere 0,1 bis 4 Gew.-%, eines funktionalen Materials oder einer Mischung funktionaler Materialien, E) 0,1 bis 30 Gew.-%, insbesondere 1 bis 20 Gew.-%, Additive und/oder Hilfsstoffe oder eine Mischung solcher Stoffe.

Als Komponente C, sofern ein Farbmittel vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey") wie auch um Pigmente (einen Überblick über organische wie anorganische Pigmente gibt Ullmann's Encyclopedia of Industrial Chemistry, Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Des Weiteren ist es vorteilhaft, wenn das Farbmittel bei Temperaturen von 160°C und mehr für einen Zeitraum von mehr als 5 min. stabil, insbesondere farbstabil ist. Es ist auch möglich, dass das Farbmittel einer vorgegebenen und reproduzierbaren Farbveränderung unter den Verarbeitungsbedingungen unterworfen ist und entsprechend ausgewählt wird. Pigmente müssen neben der Temperaturstabilität insbesondere in feinster Partikelgrößenverteilung vorliegen. Für einen Tintenstrahldruck bedeutet dies in der Praxis, dass die Teilchengröße nicht über 1,0 µm hinausgehen sollte, da sonst Verstopfungen im Druckkopf die Folge sind. In der Regel haben sich nanoskalige Festkörperpigmente und gelöste Farbstoffe bewährt. Die Farbmittel können kationisch, anionisch oder auch neutral sein. Lediglich als Beispiele für im Tintenstrahldruck verwendbare Farbmittel seien genannt: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtholschwarz C.I. Nr. 20470, Bayscript® Schwarz flüssig, C.I. Basic Black 11, C.I. Basic Blue 154, Cartasol® Türkis K-ZL flüssig, Cartasol® Türkis K-RL flüssig (C.I. Basic Blue 140), Cartasol Blau K5R flüssig. Geeignet sind des Weiteren z.B. die im Handel erhältlichen Farbstoffe Hostafine® Schwarz TS flüssig (vertrieben von Clariant GmbH Deutschland), Bayscript® Schwarz flüssig (C.I.-Gemisch, vertrieben von Bayer AG Deutschland), Cartasol® Schwarz MG flüssig (C.I. Basic Black 11, Eingetragenes Markenzeichen der Clariant GmbH Deutschland), Flexonylschwarz® PR 100 (E C.I. Nr. 30235, vertrieben von Hoechst AG), Rhodamin B, Cartasol® Orange K3 GL, Cartasol® Gelb K4 GL, Cartasol® K GL, oder Cartasol® Rot K-3B. Des Weiteren können als lösliche Farbmittel Anthrachinon-, Azo-, Chinophthalon-, Cumarin-, Methin-, Perinon- und/oder Pyrazolfarbstoffe, z.B. unter dem Markennamen Macrolex® erhältlich, Verwendung finden. Weitere geeignete Farbmittel sind in der Literaturstelle Ullmann's Encyclopedia of Industrial Chemistry, Electronic Release 2007, Wiley Verlag, Kapitel "Colorants Used in Ink Jet Inks" beschrieben. Gut lösliche Farbmittel führen zu einer optimalen Integration in die Matrix bzw. das Bindemittel der Druckschicht. Die Farbmittel können entweder direkt als Farbstoff bzw. Pigment zugesetzt werden oder als Paste, einem Gemisch aus Farbstoff und Pigment zusammen mit einem weiteren Bindemittel. Dieses zusätzliche Bindemittel sollte chemisch kompatibel mit den weiteren Komponenten der Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von so genannten Buntpigmenten in den Skalenfarben Cyan-Magenta-Yellow und bevorzugt auch (Ruß)-Schwarz sind Volltonfarbabbildungen möglich.

Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse in: Optical document security, 3rd Ed., Artech House, 2005) gemeint, die zur Absicherung von Wert- und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore, aber auch magnetisierbare, photoakustisch adressierbare oder piezoelektrische Materialien. Des Weiteren können Raman-aktive oder Raman-verstärkende Materialien eingesetzt werden, ebenso wie so genannte Barcode-Materialien. Auch hier gelten als bevorzugte Kriterien entweder die Löslichkeit in der Komponente B oder bei pigmentierten Systemen Teilchengrößen < 1 µm sowie eine Temperaturstabilität für Temperaturen > 160°C im Sinne der Ausführungen zur Komponente C. Funktionale Materialien können direkt zugegeben werden oder über eine Paste, d.h. einem Gemisch mit einem weiteren Bindemittel, welches dann Bestandteil der Komponente E bildet, oder dem eingesetzten Bindemittel der Komponente A.

Die Komponente E umfasst bei Tinten für einen Tintenstrahldruck üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel® GXL und Parmetol® A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxylierte Diole usw. Beispiele sind die Produktreihen Surfynol® und Tergitol®. Die Menge an Tensiden wird insbesondere bei Anwendung für den Tintenstrahldruck beispielsweise mit der Maßgabe gewählt, dass die Oberflächenspannung der Tinte im Bereich von 10 bis 60 mN/m, vorzugsweise 20 bis 45 mN/m, gemessen bei 25°C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Tinte können (ggf. wasserlösliche) Polymere vorgesehen sein. Hier kommen alle für übliche Tintenformulierungen geeigneten Polymere in Frage. Beispiele sind wasserlösliche Stärke, insbesondere mit einem mittleren Molekulargewicht von 3.000 bis 7.000, Polyvinylpyrrolidon, insbesondere mit einem mittleren Molekulargewicht von 25.000 bis 250.000, Polyvinylalkohol, insbesondere mit einem mittleren Molekulargewicht von 10.000 bis 20.000, Xanthan-Gummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic®. Der Anteil an Biozid, bezogen auf die Gesamtmenge an Tinte, kann im Bereich von 0 bis 0,5 Gew-%, vorzugsweise 0,1 bis 0,3 Gew.-%, liegen. Der Anteil an Tensid, bezogen auf die Gesamtmenge an Tinte, kann im Bereich von 0 bis 0,2 Gew.-% liegen. Der Anteil an Stellmitteln kann, bezogen auf die Gesamtmenge an Tinte, 0 bis 1 Gew.-%, vorzugsweise 0,1 bis 0,5 Gew.-%, betragen. Zu den Hilfsmitteln werden auch sonstige Komponenten gezählt, wie beispielsweise Essigsäure, Ameisensäure oder n-Methyl-Pyrrolidon oder sonstige Polymere aus der eingesetzten Farbstofflösung oder -Paste. Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen.

Die vorstehend beschriebene Tintenzusammensetzung ist insbesondere für den Tintenstrahldruck geeignet, kann aber auch für beliebige andere Drucktechniken eingesetzt werden, sofern das Verhältnis der einzelnen Komponenten an die Anwendung angepasst wird. Besonders vorteilhaft in diesem Zusammenhang ist, dass die beschriebene Zusammensetzung als Bindemittel ein Polycarbonatderivat enthält, wenn die Polymerschichten des Verbundes ebenfalls aus Polycarbonat bestehen.

Besonders bevorzugt ist es, wenn der Flächenanteil der modifizierten Teilbereiche einer Oberfläche einer Polymerschicht in einem Druckbereich im Verbund maximal 35 %, vorzugsweise maximal 30 %, besonders bevorzugt 20 % und ganz besonders bevorzugt maximal 15 %, der Gesamtfläche der Polymerschicht beträgt. Damit wird wirksam verhindert, dass die einzelnen Schichten voneinander getrennt werden können. Der Flächenanteil der modifizierten Teilbereiche vermittelt nämlich den haftfesten Kontakt aneinander angrenzender Polymerschichten nicht in der gleichen Weise wie dies mit der zuvor beschriebenen Tintenzusammensetzung auf Polycarbonatbasis bei Anwendung auf einem Polycarbonat-Schichtverbund möglich ist. Grundsätzlich kann der Anteil der modifizierten Teilbereiche zwar noch höher sein, wenn der Druckbereich, in dem sich die modifizierten Teilbereiche befinden, nicht am Rand des Schichtverbundes liegt. In letzterem Falle sollte der Flächenanteil der modifizierten Teilbereiche in dem Druckbereich an der Gesamtfläche dieses Druckbereiches sogar noch deutlich geringer sein, vorzugsweise maximal 15 %, besonders bevorzugt maximal 10 % und ganz besonders bevorzugt maximal 7,5 %.

Um einen haftfesten Kontakt aneinander anliegender Polymerschichten bei beliebigem Anteil an modifizierter Gesamtfläche des Dokumentes zu gewährleisten, kann das Reagenz ferner eine chemische Funktionalität enthalten, um zumindest die Teile des Reagenzes, beispielsweise perfluorierte Gruppen, wieder von der Oberfläche zu entfernen, die für die Modifizierung der Oberflächenenergie und somit die Beeinflussung des Druckverhaltens bei der Bildung der primären sichtbaren Druckschicht verantwortlich sind. Hierzu können alle dem Fachmann vertrauten Schutzgruppen und bekannten Methoden zu deren Entfernung Verwendung finden. Besonders bevorzugt sind jedoch Funktionalitäten, welche eine Entfernung bei den bei der Einbringung der ersten Information angewendeten Trocknungsbedingungen ermöglichen. Diese Trocknungsbedingungen sehen im Allgemeinen eine thermische Behandlung und/oder Beaufschlagung mit UV- oder IR-Strahlung vor. Geeignete chemische Funktionalitäten sind daher zum Beispiel Radikalstarterfunktionalitäten, die mittels dieser Strahlung gespalten werden, beispielsweise, aber nicht ausschließlich, Azo-Gruppen (-N=N-) (Beispiel Azobisisobutyronitril, AIBN) oder Peroxide (-O-O-) (Beispiel Dibenzoylperoxid, DBPO). Die für die Modifizierung der Oberflächenenergie verantwortlichen Gruppen, beispielsweise die perfluorierten Gruppen, sind in einem derartigen Falle über diese Funktionalitäten an das Restmolekül des reaktiven Reagenzes (Spacer, reaktive Gruppe zum Binden an die Polymerschichtoberfläche) gebunden und werden beispielsweise beim Trocknen der primären sichtbaren Druckschicht mittels UV- oder IR-Strahlung abgespalten. Dabei bilden sich wiederum Gruppen in den gebundenen Restmolekülen der reaktiven Reagenzien, die mit der angrenzenden Polymerschicht eine ausreichend feste Verbindung eingehen. Durch Realisierung dieser Ausführungsform der Erfindung ist der Flächenanteil der sekundären latent sichtbaren Information auf der Oberfläche im Druckbereich nicht begrenzt.

Für den Fall, dass die Polymerschichten mit Wasser nicht benetzbar sind und die Tintenzusammensetzung im Wesentlichen mit Wasser nicht mischbar ist, etwa wenn die Polymerschicht aus Polycarbonat besteht, können die Teilbereiche der Oberflächen in den Druckbereichen dadurch modifiziert werden, dass deren Hydrophilie erhöht wird, d.h. deren Neigung erhöht wird, von Wasser benetzt zu werden. Dadurch wird erreicht, dass die Tinte beim Druckverfahren von den modifizierten Bereichen nicht aufgenommen sondern abgewiesen wird.

Eine Erhöhung der Hydrophilie der Teilbereiche kann insbesondere durch Modifizieren mittels hydrophiler Reagenzien erreicht werden. Derartige Reagenzien können mit einem sekundären Druckverfahren oder mit einem Aerosol-Schreibverfahren oder mit einem Maskenverfahren auf die Oberflächenteilbereiche aufgebracht werden. Das sekundäre Druckverfahren kann jedes Druckverfahren sein, mit dem das Reagenz verdruckt werden kann. Hierzu muss die Viskosität des Reagenzes, beispielsweise mit Lösungsmitteln und Viskositätseinstellmitteln (Glyzerin o.ä.) eingestellt werden. Beispielsweise ist hierzu das Tintenstrahldruckverfahren geeignet. Besonders bevorzugt ist ein Hochdruckverfahren, beispielsweise ein Letterset-Verfahren, ganz besonders bevorzugt ein Microcontact Printing-Verfahren, bei dem ein Silicon-Stempel mit dem gewünschten Muster der sekundären latent sichtbaren Information eingesetzt wird. Das Aerosol-Schreibverfahren ist ein maskenloses Auftragsverfahren. Beispielsweise kann das M³D®-Verfahren von Optomec®, US angewendet werden, bei dem die reaktiven Reagenzien mit einem Zerstäuber zerstäubt, das erzeugte Aerosol mit einem ersten Gasstrom zu einer Düse transportiert und mittels eines zweiten Gasstromes fokussiert auf die Oberflächenteilbereiche gesprüht wird. Das Maskenverfahren kann beispielsweise darin bestehen, das auf die Oberfläche der zu modifizierenden Polymerschicht eine Photomaske aufgelegt wird, etwa eine Lötstopmaske, die üblicherweise bei der Leiterplattenherstellung eingesetzt wird, die Photomaske mit dem Muster der sekundären latent sichtbaren Information belichtet und dann entwickelt wird. Die entstandenen frei gelegten Bereiche der Polymerschicht werden anschließend mit dem reaktiven Reagenz in Kontakt gebracht, etwa durch Eintauchen. Nach dem Hydrophilieren kann die Maske durch Strippen, etwa in verdünnter Natronlauge, wieder entfernt werden.

Derartige hydrophile Reagenzien können vor allem Verbindungen sein, die mindestens eine mit dem Material der zu modifizierenden Polymerschichten reaktive Gruppe sowie mindestens eine hydrophile Gruppe aufweisen. Zwischen den reaktiven Gruppen und den hydrophilen Gruppen können Spacergruppen vorgesehen sein. Insofern wird auf die vorstehende Beschreibung zu Spacergruppen im Grundpolymer in den Polymerschichten, über die die reaktiven Gruppen an das Grundpolymer gebunden sind, Bezug genommen. Danach können derartige Spacergruppen u.a. -(CH₂)ₙ-, -(CH₂-CH₂-O)ₙ-, -(SiR₂-O)ₙ-, -(C₆H₄)ₙ-, -(C₆H₁₀)ₙ-, -C₁-Cₙ₋Alkyl, -C₃-C₍ₙ₊₃₎-Aryl, -C₄-C₍ₙ₊₄₎-ArAlkyl, oder korrespondierende Heterocyclen mit Heteroatomen O, N, oder S, wobei n = 1 bis 20, vorzugsweise 1 bis 10, sein. Die Spacergruppe kann auch eine oben beschriebene Funktionalität zur Entfernung des Reagenzes enthalten.

Die reaktiven Gruppen können u.a. aus der Gruppe ausgewählt sein, umfassend Carbonsäurechlorid-, Carbonsäureanhydrid-, Oxiran- und Phthalimidgruppen. Derartige Reagenzien sind insbesondere bei der Modifizierung von Oberflächen von Polymerschichten aus Polycarbonat geeignet, das -O-(C=O)-O- -Gruppen enthält, an denen diese reaktiven Gruppen durch nukleophile Substitution binden können, so dass die hydrophilen Reagenzien chemisch gebunden werden. Daraus ist zu erkennen, dass grundsätzlich auch andere nukleophile Reagenzien verwendbar sind, die in geeigneter Weise eine chemische Bindung mit dem Polycarbonat eingehen können. Zur Bindung der hydrophilen Reagenzien an die Oberflächenteilbereiche sind geeignete Reaktionsbedingungen einzuhalten. Diese sind dem Fachmann auf dem Gebiet der organischen Synthese bekannt, so dass dieser die geeigneten Bedingungen auswählen kann.

Die hydrophilen Reagenzien enthalten darüber hinaus hydrophile Gruppen, die die Teilbereiche der Oberflächen der Polymerschichten so modifizieren, dass diese hydrophil werden und die hydrophobe Drucktinte abweisen. Derartige hydrophile Gruppen sind dem Fachmann auf dem Fachgebiet ebenfalls bekannt. Bevorzugte hydrophile Gruppen sind ausgewählt aus der Gruppe, umfassend Carbonsäure-, Sulfonsäure-, Ammonium-, Imidazolium-, Benzimidazolium-, Pyrazolium-, Amidinium-, Silanol-, Silandiol-, Silantriol-, Sulfonium- und Phosphoniumgruppen. Selbstverständlich können auch andere hydrophile Gruppen angewendet werden. Mit diesem Verfahren wird eine im Wesentlichen monomolekulare Schicht (Monolage) aufgebracht.

In einer alternativen Verfahrensweise können die Teilbereiche der Oberflächen der Polymerschichten auch durch Aufbringen einer hydrophilen Schicht modifiziert werden. Hierzu wird eine hydrophile Schicht auf diese Teilbereiche, beispielsweise mit einem sekundären Druckverfahren, aufgebracht. Ebenso wie bei Verwendung eines reaktiven Reagenzes kann ein Tintenstrahl-Druckverfahren oder ein Microcontact Printing-Verfahren angewendet werden. Die hydrophile Schicht kann durch Aufbringen einer hydrophilen Paste oder einer hydrophilen Dispersion oder einer hydrophilen Lösung gebildet werden, wobei die Paste oder Dispersion vor allem hydrophile Bestandteile, wie hydrophile Lösungsmittel, etwa Wasser, kurzkettige Alkohole (beispielsweise Ethanol) oder Ethylenglykolether oder -etherester, sowie hydrophile Füllstoffe, wie Cellulose, und Thixotropiemittel enthalten kann. Außerdem kann die Paste oder Dispersion auch Tenside enthalten, die eine Benetzung der hydrophoben zu modifizierenden Teilbereiche der Oberflächen einer Polymerschicht ermöglichen. Die hydrophile Lösung oder Dispersion kann beispielsweise auch Polyvinylalkohol enthalten.

Falls die Polymerschichten andererseits im Wesentlichen ein hydrophiles Oberflächenverhalten aufweisen, d.h. von Wasser benetzbar sind, und somit auch die Drucktinte im Wesentlichen hydrophil, d.h. mit Wasser mischbar ist, können die Teilbereiche der Oberflächen durch Hydrophobierung modifiziert werden, um das sekundäre latent sichtbare Muster zu bilden. Eine derartige Hydrophobierung ist beispielsweise durch Fluorierung oder Siliconierung möglich. Die Fluorierung der Oberflächenbereiche kann insbesondere in Gegenwart einer Plasmaentladung oder einer Koronaentladung durchgeführt werden. Alternativ kann die Fluorierung auch unter Einwirkung von Ultraviolettstrahlung stattfinden. Zur Fluorierung können insbesondere Fluorkohlenwasserstoffe eingesetzt werden. Diese werden durch die Plasma- oder Koronaentladung oder UV-Strahlung zersetzt und bilden freie Fluoratome, die die Teilbereiche unmittelbar fluorieren. Um diese Hydrophobierung selektiv nur in den Teilbereichen der zu modifizierenden Oberflächen durchzuführen, kann ein Maskenverfahren eingesetzt werden, das wie im Falle der Hydrophilierung der Oberflächen durchgeführt wird.

Alternativ können Polymeroberflächen auch durch Aufbringen einer hydrophoben Schicht hydrophobiert werden. Derartige Schichten können beispielsweise silikonhaltig sein und/oder Fluorverbindungen enthalten. In letzterem Falle kann es sich beispielsweise um fluorierte Bindemittel enthalten. Eine derartige Schicht kann u.a. mit einem Druckverfahren auf die Oberfläche aufgebracht werden. Hierzu kann beispielsweise eine UV-härtende Druckfarbe verwendet werden.

Polycarbonatoberflächen können sowohl hydrophiliert als auch hydrophobiert werden, um deren Oberflächenenergie vor dem Erzeugen der primären sichtbaren Druckschicht zu modifizieren.

Nachfolgend wird die Erfindung an Hand von Beispielen beschrieben, die nicht beschränkend sind.
- Fig. 1: zeigt die Überlagerung eines durch Tintenstrahldruck erzeugten primären sichtbaren Musters mit einem sekundären latent sichtbaren Muster in Form von Guillochen;
- Fig. 2: zeigt die Überlagerung eines durch Tintenstrahldruck erzeugten primären sichtbaren Musters mit einem sekundären latent sichtbaren Muster in Form einer groben Oberflächenrasterung;
- Fig. 3: zeigt die Überlagerung eines durch Tintenstrahldruck erzeugten primären sichtbaren Musters mit einem sekundären latent sichtbaren Muster in Form einer feinen Oberflächenrasterung;
- Fig. 4: zeigt die Bildung von Satelliten an einem mit einem Tintenstrahldruck erzeugten primären sichtbaren Muster.

Zur Herstellung eines mittels Tintenstrahldruck erzeugbaren primären sichtbaren Musters auf einer Polycarbonatfolie werden folgende Tintenzusammensetzungen hergestellt:

### Beispiel 1: Herstellung von Polycarbonatderivaten für eine Tintenzusammensetzung als Bindemittel

149,0 g (0,65 Mol) Bisphenol A (2,2-Bis-(4-hydroxyphenyl)-propan, 107,9 g (0,35 Mol) 1,1-Bis-(4-hydroxyphenyl)-3,3,5-trimethylcyclohexan, 336,6 g (6 Mol) KOH und 2700 g Wasser werden in einer Inertgas-Atmosphäre unter Rühren gelöst. Dann wird eine Lösung von 1,88 g Phenol in 2500 ml Methylenchlorid zugefügt. In die gut gerührte Lösung werden bei pH 13 bis 14 und 21 bis 25°C 198 g (2 Mol) Phosgen eingeleitet. Danach wird 1 ml Ethylpiperidin zugegeben und noch 45 min gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigt eine relative Lösungsviskosität von 1,263. Die Glastemperatur wird zu 183°C bestimmt (DSC).

### Beispiel 2: Herstellung einer für die Herstellung einer Tintenstrahldrucktinte geeigneten flüssigen Zubereitung

Eine flüssige Zubereitung wird aus 17,5 Gew.-Teilen des Polycarbonatderivats aus Beispiel 1 und 82,5 Gew.-Teilen eines Lösungsmittel-Gemisches gemäß Tabelle I hergestellt.

**Tabelle I**

| Stoff | Gew.-% |
|---|---|
| Mesitylen | 2,4 |
| 1-Methoxy-2-propanolacetat | 34,95 |
| 1,2,4-Trimethylbenzol | 10,75 |
| Ethyl-3-ethoxypropionat | 33,35 |
| Cumol | 0,105 |
| Solvent Naphtha | 18,45 |

Es wird eine farblose, hochviskose Lösung mit einer Lösungsviskosität bei Raumtemperatur von 800 mPa.s erhalten.

### Beispiel 3: Herstellung einer erfindungsgemäß eingesetzten Tintenstrahldrucktinte

In einem 50 ml Weithalsgewindeglas werden 10 g Polycarbonatlösung aus Beispiel 2 und 32,5 g des Lösungsmittelgemisches aus Beispiel 2 mit einem Magnetrührer homogenisiert (4 %-ige PC-Lösung). Es wird eine farblose, niederviskose Lösung mit einer Lösungsviskosität bei 20°C von 5,02 mPa.s erhalten.

Die erhaltene Polycarbonat-Lösung wird zusätzlich mit ca. 2 % Pigment Black 28 versetzt. Mit der sich dabei ergebenden Tinte können schwarz/weiß-Bilder auf Polycarbonatfolien gedruckt werden. Durch eine äquivalente Zugabe anderer Pigmente oder Farbstoffe lassen sich entsprechend monochrome und/oder farbige Tinten herstellen.

Eine Änderung der Auflösung eines mit der Tinte gedruckten Pixelmusters tritt bei dem Fügevorgang, in dem die mit dem Pixelmuster bedrucke Substratschicht mit einer darüber angeordneten Substratschicht verbunden wird, nahezu nicht auf. Dies bedeutet, dass das Pixelmuster auch nach der Lamination in nahezu der gleichen Auflösung erhalten bleibt.

Eine optische Untersuchung des Verbundes ergibt ansonsten keinerlei erkennbare Phasengrenze. Der Verbund zeigt sich als monolithischer Block, der auch Delamination hervorragend widersteht.

### Beispiel 4: Überlagerung eines mittels Tintenstrahldruck hergestellten primären sichtbaren Druckbildes mit einem sekundären latent sichtbaren Muster in Form von Guillochen

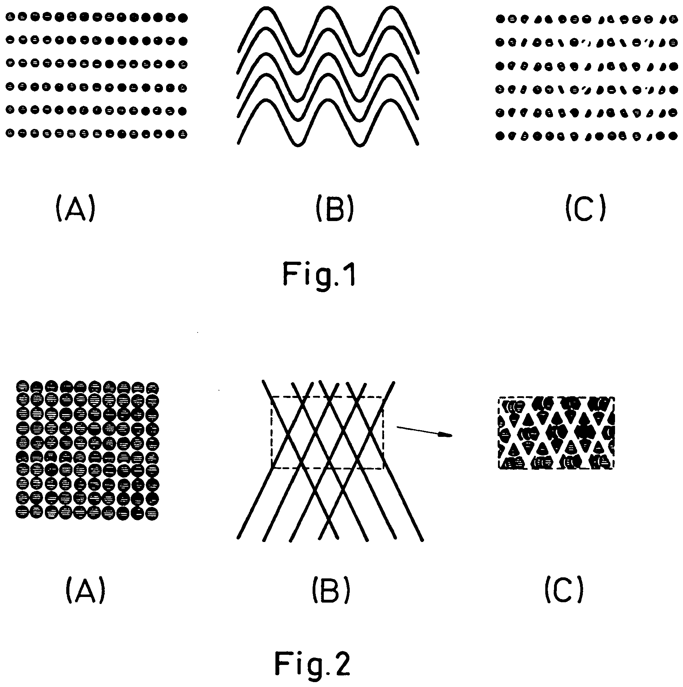

Mit der gemäß Beispiel 3 hergestellten Tintenstrahldrucktinte wird eine Polycarbonatfolie bedruckt. Es ergibt sich eine Pixelmatrix gemäß Fig. 1A mit kreisrunden Druckpixeln in Reihen und Spalten (Vergleichsversuch).

Eine weitere Polycarbonatfolie wird im wasserlosen Offset-Verfahren, dem sogenannten Toray-Verfahren, mit einer UV-härtenden und für das menschliche Auge unsichtbaren Farbe bedruckt. Diese Farbe ist silikonhaltig, ohne Farbmittel und gegebenenfalls mit fluorierten Binderanteilen versehen. Für die Bedruckung wird auf eine Druckform ein Druckmotiv in Form von Guillochenlinien kopiert und auf eine PC-Folie gedruckt. Dadurch werden die in Fig. 1B dargestellten Guillochenlinien, für das menschliche Auge nicht sichtbar, auf die Oberfläche gedruckt. Durch die Behandlung wird ein nicht sichtbares Muster auf der Polycarbonatoberfläche gebildet (Fig. 1B).

Anschließend wird die derart vorbehandelte Oberfläche mit einem Tintenstrahldruck wie zuvor angegeben versehen. An den Stellen, an denen die Oberflächenenergie der Polymerfolie mit dem Reagenz verändert (hydrophobiert) worden ist, können keine Druckpixel abgesetzt werden, bzw. die teilweise erfassten Druckpixel werden in diesen Bereich abgeschnitten. Somit ergibt sich ein Bild des primären Tintenstrahldrucks mit dem sekundären latent sichtbaren Muster der Guillochen, das mit dem Reagenz erzeugt worden ist (Fig. 1C). Dieses Druckbild mit überlagerten Guillochen ist mit bloßem Auge wahrnehmbar.

### Beispiel 5: Überlagerung eines mittels Tintenstrahldruck hergestellten primären sichtbaren Druckbildes mit einem sekundären latent sichtbaren Muster in Form einer groben Oberflächenrasterung

Mit der gemäß Beispiel 3 hergestellten Tintenstrahldrucktinte wird eine Polycarbonatfolie bedruckt. Es ergibt sich die Pixelmatrix gemäß Fig. 2A mit kreisrunden Druckpixeln in Reihen und Spalten (Vergleichsversuch).

Eine weitere Polycarbonatfolie wird zunächst, wie zuvor geschildert, im Toray-Verfahren mit einer silikonhaltigen Farbe bedruckt. Die Druckform weist Muster in Form einer groben Oberflächenrasterung auf, so dass beim Bedrucken der Polycarbonatfolie lediglich die Rasterlinien gedruckt werden. Diese Oberflächenrasterung bildet rautenförmige Rasterflächen, die größer sind als die Flächen der Druckpixel des Tintenstrahldruckes.

Die verwendete Farbe hat die Zusammensetzung aus Beispiel 4. Durch die Behandlung wird wiederum ein nicht sichtbares Muster auf der Polycarbonatoberfläche gebildet (Fig. 2B).

Anschließend wird die derart vorbehandelte Oberfläche, wie zuvor angegeben, mit einem Tintenstrahldruck versehen. An den Stellen, an denen die Oberflächenenergie der Polymerfolie mit der silikonhaltigen Farbe verändert (hydrophiliert) worden ist, können keine Druckpixel abgesetzt werden. Vielmehr laufen die im Bereich der Rasterlinien gedruckten Tintentropfen in die Rasterflächen zusammen und bilden innerhalb der Rasterflächen Rautenmuster. Somit ergibt sich ein Bild mit dem sekundären latent sichtbaren Rautenmuster, das mit der silikonhaltigen Tinte erzeugt worden ist (Fig. 2C). Dieses Druckbild mit rautenförmiger Rasterung kann mit bloßem Auge wahrgenommen werden.

### Beispiel 6: Überlagerung eines mittels Tintenstrahldruck hergestellten primären sichtbaren Druckbildes mit einem sekundären latent sichtbaren Muster in Form einer feinen Oberflächenrasterung

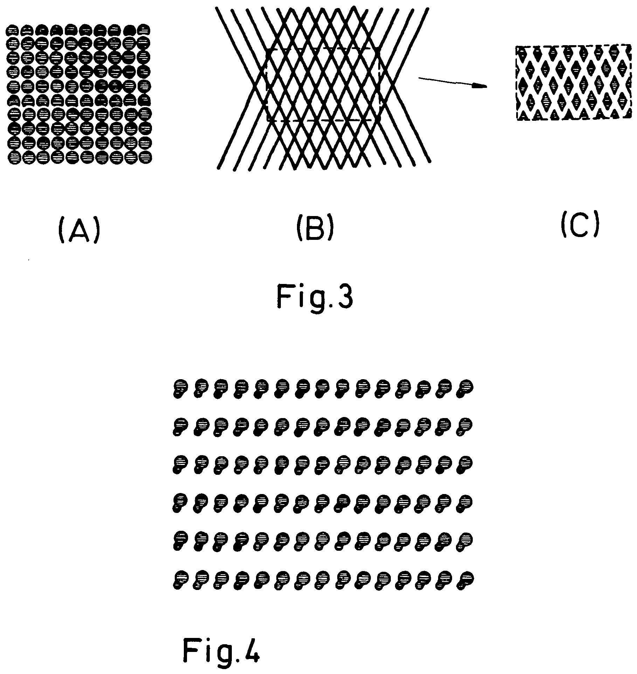

Mit der gemäß Beispiel 3 hergestellten Tintenstrahldrucktinte wird eine Polycarbonatfolie bedruckt. Es ergibt sich die Pixelmatrix gemäß Fig. 3A mit kreisrunden Druckpixeln in Reihen und Spalten (Vergleichsversuch).

Eine weitere Polycarbonatfolie wird, wie zuvor geschildert, mit einer silikonhaltigen Farbe im Toray-Verfahren bedruckt. Die Druckform weist Muster in Form einer groben Oberflächenrasterung auf, so dass beim Bedrucken der Polycarbonatfolie lediglich die Rasterlinien gedruckt werden. Diese Oberflächenrasterung bildet rautenförmige Rasterflächen, die etwas kleiner sind als die Flächen der Druckpixel des Tintenstrahldruckes. Die verwendete Farbe hat die Zusammensetzung aus Beispiel 4. Durch die Behandlung wird wiederum ein nicht sichtbares Muster auf der Polycarbonatoberfläche gebildet (Fig. 3B).

Anschließend wird die derart vorbehandelte Oberfläche, wie zuvor angegeben, mit einem Tintenstrahldruck versehen. An den Stellen, an denen die Oberflächenenergie der Polymerfolie mit der silikonhaltigen Tinte verändert (hydrophiliert) worden ist, können keine Druckpixel abgesetzt werden. Vielmehr laufen die Tintentropfen in die durch die Rasterlinien gebildeten rautenförmigen Rasterflächen zusammen, so dass die erzeugten Druckpixel die Rautenform der Rasterung annehmen (Fig. 3C). Dieses Druckbild mit rautenförmiger Rasterung kann mit bloßem Auge nicht wahrgenommen werden.

### Beispiel 7: Bildung von Satelliten an einem mit einem Tintenstrahldruck erzeugten primären sichtbaren Muster.

Zur Herstellung eines mehrfarbigen Passbildes einer Person werden mehrere Farbauszüge des Bildes in Magenta, Cyan, Yellow und Schwarz erstellt.

Ein mittels Tintenstrahldruck gedruckter Farbauszug des Passbildes der Person in Yellow wird in einem Druckbereich auf eine erste Polycarbonatfolie gedruckt, die zuvor mit dem Muster von Guillochen in Teilbereichen dieses Druckbereiches gemäß Beispiel 4 hydrophiliert worden ist. Die hierfür verwendete Tintenzusammensetzung entspricht der von Beispiel 3; allerdings wird Pigment Black 28 durch ein gelbes Pigment ersetzt.

Weitere Farbauszüge des Passbildes in Cyan, Magenta und Schwarz werden mittels Tintenstrahldruck auf weitere Polycarbonatfolien in einem dem Druckbereich der ersten Polycarbonatfolie entsprechenden Druckbereich gedruckt. Die Tintenzusammensetzungen sind die von Beispiel 3. Allerdings werden zum Drucken des Cyan- und des Magenta-Farbauszuges geeignete Farbstoffe anstelle von Pigment Black 28 verwendet. Der Tintenstrahldruckkopf wird in allen drei Fällen so angesteuert, dass sich beim Ausstoßen eines Tropfens ein langer Schwanz bildet, dessen Geschwindigkeit kleiner ist als der tropfenförmige Kopf, so dass sich ein weiterer langsamerer Satellitentropfen bildet. Der Tintenstrahldruckkopf ist gemäß US 7,093,915 B2 ferner so modifiziert, dass der langsamere Satellitentropfen in einem Austrittswinkel ≠ 0 gegenüber der Austrittsrichtung des Haupttropfens zur Polycarbonatfolie ausgestoßen wird. Somit wird beim jeweiligen Druck das in Fig. 4 gezeigte modifizierte Druckbild erzeugt. Zusätzlich wird bei jedem Farbauszug ein anderer Winkel, unter dem der Satellitentropfen in der Druckebene auf die Polycarbonatfolie auftrifft, eingestellt: Die Lage der Satellitenpixel des Cyan-Farbauszuges wird relativ zu der der Hauptpixel in einer 12 Uhr-Position eingestellt. Die Lage der Satellitenpixel des Magenta-Farbauszuges wird relativ zu der der Hauptpixel in einer 4 Uhr-Position eingestellt. Und die Lage der Satellitenpixel des Schwarz-Farbauszuges wird relativ zu der der Hauptpixel in einer 8 Uhr-Position (wie in Fig. 4) eingestellt.

Die Folien werden dann übereinander gestapelt und laminiert. Dabei bildet sich ein monolithischer Verbund der Folien. Die gedruckten Farbauszüge im Schichtverbund können den einzelnen Lagen des Schichtverbundes zugeordnet werden: der Yellow-Farbauszug ist daran erkennbar, dass dieser durch ein Guillochenmuster durchbrochen ist. Die anderen Farbauszüge sind jeweils daran erkennbar, dass die einzelnen Druckpixel seitlich an den Hauptpixeln vorstehende Satelliten aufweisen.

## Patentansprüche

1. Polymerschichtverbund für ein Sicherheits- und/oder Wertdokument, umfassend mindestens zwei stoffschlüssig miteinander verbundene Polymerschichten, wobei auf mindestens einer Oberfläche mindestens einer der Polymerschichten durch jeweiliges Aufbringen einer sichtbaren Druckschicht in einem Druckbereich Muster gebildet sind,
**dadurch gekennzeichnet, dass** die Muster der sichtbaren Druckschichten dadurch verändert sind, dass die Oberflächenenergie der Polymerschichten in Teilbereichen der Druckbereiche vor dem Aufbringen der sichtbaren Druckschichten modifiziert ist, und dass die Modifizierung der Oberflächenenergie in einer Erhöhung oder Erniedrigung der Hydrophilie der Oberfläche in den Druckbereichen besteht.

2. Polymerschichtverbund nach Anspruch 1, **dadurch gekennzeichnet, dass** die modifizierten Teilbereiche der Oberflächen eine sekundäre latent sichtbare Information und die sichtbaren Druckschichten eine primäre sichtbare Information ergeben und dass die sekundäre latent sichtbare und die primäre sichtbare Information überlagert sind.

3. Polymerschichtverbund nach Anspruch 2, **dadurch gekennzeichnet, dass** die primäre sichtbare Information ein personalisiertes und/oder individualisiertes Merkmal ist.

4. Polymerschichtverbund nach einem der Ansprüche 2 - 3, **dadurch gekennzeichnet, dass** die sekundäre latent sichtbare Information durch eine Oberflächenrasterung mit Rasterflächen gebildet ist.

5. Polymerschichtverbund nach Anspruch 4, **dadurch gekennzeichnet, dass** die sichtbare Druckschicht aus Druckpixeln besteht und dass die Rasterflächen der Oberflächenrasterung größer sind als die Flächen der Druckpixel oder dass die Rasterflächen der Oberflächenrasterung kleiner sind als die Flächen der Druckpixel.

6. Polymerschichtverbund nach einem der vorstehenden Ansprüche, **dadurch gekennzeichnet, dass** die Druckbereiche in dem Polymerschichtverbund auf innen liegenden Schichten des Verbundes angeordnet sind.

7. Polymerschichtverbund nach einem der vorstehenden Ansprüche, **dadurch gekennzeichnet, dass** der Flächenanteil der modifizierten Teilbereiche einer Oberfläche einer Polymerschicht in einem Druckbereich maximal 35 % der Gesamtfläche der Polymerschicht beträgt.

8. Verfahren zur Herstellung eines Polymerschichtverbundes für ein Sicherheits- und/oder Wertdokument, umfassend mindestens zwei stoffschlüssig miteinander verbundene Polymerschichten, umfassend die Verfahrensschritte: Bereitstellen der Polymerschichten für den Polymerschichtverbund, Bilden von Mustern durch jeweiliges Aufbringen einer sichtbaren Druckschicht auf mindestens eine Oberfläche mindestens einer der Polymerschichten in einem Druckbereich und Verbinden der Polymerschichten miteinander,
**dadurch gekennzeichnet, dass** die Oberflächenenergie der Polymerschichten in Teilbereichen der Druckbereiche vor dem Aufbringen der sichtbaren Druckschichten modifiziert wird und dass die Modifizierung der Oberflächenenergie in einer Erhöhung oder Erniedrigung der Hydrophilie der Oberfläche in den Druckbereichen besteht.

9. Verfahren nach Anspruch 8, **dadurch gekennzeichnet, dass** die Teilbereiche der Oberflächen mittels hydrophiler Reagenzien oder durch Aufbringen einer hydrophilen Schicht modifiziert werden.

10. Verfahren nach einem der Ansprüche 8 - 9, **dadurch gekennzeichnet, dass** die modifizierten Teilbereiche der Oberflächen unter Anwendung eines sekundären Druckverfahrens gebildet werden, wobei das sekundäre Druckverfahren ein Mikro-Contact-Printing-Verfahren sein kann.

11. Verfahren nach einem der Ansprüche 8 - 10, **dadurch gekennzeichnet, dass** die modifizierten Teilbereiche der Oberflächen eine sekundäre latent sichtbare Information und die sichtbaren Druckschichten eine primäre sichtbare Information ergeben und dass die sekundäre latent sichtbare und die primäre sichtbare Information überlagert werden.

12. Verfahren nach Anspruch 11, **dadurch gekennzeichnet, dass** die primäre sichtbare Information ein personalisiertes und/oder individualisiertes Merkmal ist.

13. Verfahren nach einem der Ansprüche 11 - 12, **dadurch gekennzeichnet, dass** die sekundäre latent sichtbare Information eine Oberflächenrasterung mit Rasterflächen darstellt.

14. Verfahren nach Anspruch 13, **dadurch gekennzeichnet, dass** die sichtbare Druckschicht aus Druckpixeln gebildet wird und dass die Rasterflächen größer oder kleiner sind als die Flächen der Druckpixel.

15. Sicherheits- und/oder Wertdokument, enthaltend einen Polymerschichtverbund nach einem der Ansprüche 1 - 7.

## Claims

1. Polymer layer composite for a security and/or valuable document, comprising at least two polymer layers connected to each other in a material fit, wherein patterns are formed on at least one surface of at least one of the polymer layers by respectively applying a visible printing layer in a printing region, **characterised in that** the patterns of the visible printing layers are modified by the modification of the surface energy of the polymer layers in partial regions of the printing regions before the application of the visible printing layers, and that the modification of the surface energy consists of an increase or reduction of the hydrophilism of the surface in the printing regions.

2. Polymer layer composite according to claim 1, **characterised in that** the modified partial regions of the surfaces provide a secondary latently visible item of information, and the visible printing layers provide a primary visible item of information, and that the secondary latently visible and the primary visible information are overlaid.

3. Polymer layer composite according to claim 2, **characterised in that** the primary visible information is a personalised and/or individualised feature.

4. Polymer layer composite according to any one of claims 2-3, **characterised in that** the secondary latently visible information item is formed by a surface raster screening with raster screen surfaces.

5. Polymer layer composite according to claim 4, **characterised in that** the visible printing layer consists of printing pixels, and that the raster screen surfaces of the surface raster screening are larger than the surfaces of the print pixels, or that the raster screen surfaces of the surface raster screening are smaller than the surfaces of the print pixels.

6. Polymer layer composite according to any one of the preceding claims, **characterised in that** the printing regions are arranged in the polymer layer composite on layers of the composite lying in the interior.

7. Polymer layer composite according to any one of the preceding claims, **characterised in that** the surface proportion of the modified partial regions of a surface of a polymer layer in a printing region amounts to a maximum of 35 % of the total surface area of the polymer layer.

8. Method for producing a polymer layer composite for a security and/or valuable document, comprising at least two polymer layers connected to each other in a material fit, and comprising the method steps: Provision of the polymer layers for the polymer layer composite, forming of patterns by the respective application of a visible printing layer onto at least one surface of at least one of the polymer layers in a printing region and connection of the polymer layers with one another,
**characterised in that** the surface energy of the polymer layers is modified in partial regions of the printing regions before the application of the visible printing layers, and that the modifying of the surface energy consists of an increase or reduction of the hydrophilism of the surface in the printing regions.

9. Method according to claim 8, **characterised in that** the partial regions of the surfaces are modified by means of hydrophilic reagents or by the application of a hydrophilic layer.

10. Method according to any one of claims 8-9, **characterised in that** the modified partial regions of the surfaces are formed with the use of a secondary printing process, wherein the secondary printing process can be a micro-contact printing process.

11. Method according to any one of claims 8-10, **characterised in that** the modified partial regions of the surfaces provide a secondary latently visible item of information, and the visible printing layers provide a primary visible item of information, and that the second latently visible item of information and the primary visible item of information are overlaid.

12. Method according to claim 11, **characterised in that** the primary visible item of information is a personalised and/or individualised feature.

13. Method according to one of claims 11-12, **characterised in that** the secondary latently visible item of information represents a surface raster screening with raster screen surfaces.

14. Method according to claim 13, **characterised in that** the visible printing layer is formed from print pixels, and that the raster screen surfaces are larger or smaller than the surfaces of the print pixels.

15. Security and/or valuable document, containing a polymer layer composite in accordance with any one of claims 1-7.

## Revendications

1. Composite polymère stratifié pour un document de sécurité et/ou de valeur, comprenant au moins deux couches de polymère reliées entre elles par liaison de matière, dans lequel des motifs sont formés sur au moins une face supérieure d'au moins une des couches de polymère en appliquant respectivement une couche d'impression visible dans une zone d'impression, **caractérisé en ce que** les motifs des couches d'impression visibles sont modifiés **en ce que** l'énergie superficielle des couches de polymère est modifiée dans des zones partielles des zones d'impression avant l'application des couches d'impression visibles, et que la modification de l'énergie superficielle réside en une augmentation ou en une dégradation de l'hydrophilie de la face supérieure dans les zones d'impression.

2. Composite polymère stratifié selon la revendication 1, **caractérisé en ce que** les zones partielles modifiées des surfaces donnent lieu à une information secondaire visible de manière latente et les couches d'impression visibles donnent lieu à une information primaire visible, et que l'information secondaire visible de manière latente et l'information primaire visible sont superposées.

3. Composite polymère stratifié selon la revendication 2, **caractérisé en ce que** l'information primaire visible est une caractéristique personnalisée et/ou individualisée.

4. Composite polymère stratifié selon l'une quelconque des revendications 2 - 3, **caractérisé en ce que** l'information secondaire visible de manière latente est formée par un tramage superficiel pourvu de faces de trame.

5. Composite polymère stratifié selon la revendication 4, **caractérisé en ce que** la couche d'impression visible est constituée de pixels d'impression, et que les faces de trame du tramage superficiel sont plus grandes que les faces des pixels d'impression, ou que les faces de trame du tramage superficiel sont plus petites que les faces des pixels d'impression.

6. Composite polymère stratifié selon l'une quelconque des revendications précédentes, **caractérisé en ce que** les zones d'impression sont disposées dans le composite polymère stratifié sur des couches, situées à l'intérieur, du composite.

7. Composite polymère stratifié selon l'une quelconque des revendications précédentes, **caractérisé en ce que** la surface des zones partielles modifiées d'une face supérieure d'une couche de polymère dans une zone d'impression s'élève au maximum à 35 % de la surface totale de la couche de polymère.

8. Procédé servant à fabriquer un composite polymère stratifié pour un document de sécurité et/ou de valeur, comprenant au moins deux couches de polymère reliées entre elles par liaison de matière, comprenant les étapes de procédé consistant à : fournir les couches de polymère pour le composite polymère stratifié, former des motifs en appliquant de manière respective une couche d'impression visible sur au moins une face supérieure d'au moins une des couches de polymère dans une zone d'impression, et relier les couches de polymère entre elles,
**caractérisé en ce que** l'énergie superficielle des couches de polymère est modifiée dans des zones partielles des zones d'impression avant l'application des couches d'impression visibles, et que la modification de l'énergie superficielle réside en une augmentation ou en une dégradation de l'hydrophilie de la face supérieure dans les zones d'impression.

9. Procédé selon la revendication 8, **caractérisé en ce que** les zones partielles des faces supérieures sont modifiées au moyen d'agents de réaction hydrophiles ou par l'application d'une couche hydrophile.

10. Procédé selon l'une quelconque des revendications 8 - 9, **caractérisé en ce que** les zones partielles modifiées des faces supérieures sont formées en utilisant un procédé d'impression secondaire, dans lequel le procédé d'impression secondaire peut être un procédé d'impression par microcontact.

11. Procédé selon l'une quelconque des revendications 8 - 10, **caractérisé en ce que** les zones partielles modifiées des faces supérieures donnent lieu à une information secondaire visible de manière latente et les couches d'impression visibles donnent lieu à une information primaire visible, et que l'information secondaire visible de manière latente et l'information primaire visible sont superposées.

12. Procédé selon la revendication 11, **caractérisé en ce que** l'information primaire visible est une caractéristique personnalisée et/ou individualisée.

13. Procédé selon l'une quelconque des revendications 11 - 12, **caractérisé en ce que** l'information secondaire visible de manière latente constitue un tramage de face supérieure pourvu de faces de trame.

14. Procédé selon la revendication 13, **caractérisé en ce que** la couche d'impression visible est formée à partir de pixels d'impression, et que les faces de trame sont plus grandes ou plus petites que les faces des pixels d'impression.

15. Document de sécurité et/ou de valeur, contenant un composite polymère stratifié selon l'une quelconque des revendications 1 - 7.
